# EUROPEAN PATENT APPLICATION

(11) **EP 4 234 590 A1**
(43) Date of publication of application: **30.08.2023**
(21) Application number: 21885150.9
(22) Date of filing: 26.10.2021
(51) Int. Cl.: C08F 4/02, B01J 31/00, B01J 32/00, B01J 35/08, C08F 10/06, C08F 110/06

(54) **SOLID COMPONENT FOR PREPARING OLEFIN POLYMERIZATION CATALYST, AND PREPARATION METHOD THEREFOR AND APPLICATION THEREOF**

(30) Priority: 26.10.2020 CN 202011156589; 26.10.2020 CN 202011157579; 26.10.2020 CN 202011157613; 26.10.2020 CN 202011157626
(71) Applicant: CHINA PETROLEUM & CHEMICAL CORPORATION, Chaoyang District Beijing 100728 (CN); BEIJING RESEARCH INSTITUTE OF CHEMICAL INDUSTRY, CHINA PETROLEUM & CHEMICAL CORPORATION, Chaoyang District Beijing 100013 (CN)
(72) Inventor: LI, Weili, Beijing 100013 (CN); XIA, Xianzhi, Beijing 100013 (CN); ZHOU, Junling, Beijing 100013 (CN); LIU, Yuexiang, Beijing 100013 (CN); LING, Yongtai, Beijing 100013 (CN); LIU, Tao, Beijing 100013 (CN); ZHAO, Jin, Beijing 100013 (CN); GAO, Futang, Beijing 100013 (CN); REN, Chunhong, Beijing 100013 (CN); TAN, Yang, Beijing 100013 (CN); CHEN, Long, Beijing 100013 (CN)
(74) Representative: Hoffmann Eitle
(86) International application number: PCT/CN2021/126397
(87) International publication number: WO 2022/089423

(57) **Abstract**

Disclosed in the present invention is a solid component for preparing an olefin polymerization catalyst, and a preparation method therefor and an application thereof. The solid component comprises: (i) a magnesium compound as represented by the following formula (1), (ii) a Lewis base (LB), and (iii) optionally, metal components other than magnesium, wherein the LB is a compound as shown in general formula (II) or an amide compound as shown in general formula (II'). The solid component prepared in the present invention has a better particle morphology, and a catalyst prepared by using the solid component as a carrier is less likely to be crushed, and has better stereostructural orientation in olefin polymerization, particularly propylene polymerization or copolymerization.

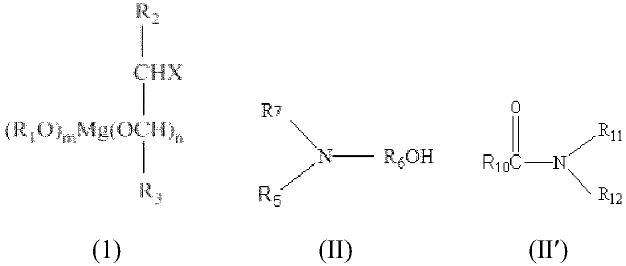

## Description

### Cross Reference of Related Applications

The present application claims the priority and benefits of the Chinese Patent Application Nos. CN202011156589.6, CN202011157579.4, CN202011157613.8 and CN202011157626.5, filed on October 26, 2020, which are incorporated herein by reference in their entirety and for all purposes.

### Field of the Invention

The present invention relates to a solid component for the preparation of polyolefin catalysts (also known as carrier), a preparation method therefor and use thereof in the preparation of polyolefin catalysts.

### Background Art

Most of the catalysts used for olefin polymerization are prepared by supporting a titanium halide on an active anhydrous magnesium chloride. In such processes, one method used to prepare the active magnesium chloride is to react anhydrous α-MgCl₂ with an alcohol to form an adduct, and then this adduct is used as a carrier to support the titanium halide to prepare a solid component of an olefin polymerization catalyst. The magnesium chloride-alcohol adduct can be prepared by methods such as spray drying, spray cooling, high pressure extrusion, high speed stirring, emulsifier, supergravity rotating bed and the like. For instance, US4421674, US4469648, WO8707620, WO9311166, US5100849, US6020279, US4399054, EP0395383, US6127304, US6323152, CN1463990, CN1580136, etc. disclose the preparation of the magnesium chloride-alcohol adducts.

In addition, studies have shown that adding a small amount of an electron donor compound to the preparation system of the binary component carrier comprised of the magnesium chloride-alcohol adduct, leading to the formation of a multi-component carrier with a structure formula of MgCl₂·mEtOH·nLB, can improve the polymerization performance of the catalyst. For example, patent CN101050245 teaches the addition of phthalate compounds, CN101544710 teaches the addition of C,C-dihydrocarbyloxy hydrocarbon compounds, CN101550205 teaches the addition of polyether compounds, CN101486776 teaches the addition of polyester compounds, CN101215344 teaches the addition of o-alkoxy benzoate compounds, and CN102796127 teaches the addition of alkoxybenzoyl compounds or hydroxybenzoyl compounds. US2008/0293897 teaches the addition of Lewis base compounds other than water during the preparation of the magnesium chloride-alcohol adduct carrier, thereby increasing the polymerization activity of the final catalyst. The Lewis base compounds can be ethers, esters and compounds having a structure formula of RXₘ, wherein R is an alkyl group of 1 to 20 carbon atoms, and X has the structure of -NH₂, -NHR or -OH.

Active magnesium chloride carriers can also be prepared by using magnesium alkoxides as raw materials. CN1016422B discloses a method for preparing a solid component of Z-N catalyst, which is prepared by reacting a soluble dialkylmagnesium with a transition metal halide in the presence of a transition metal alkoxide, and then precipitating the solid component with a liquid hydrocarbon. The alkoxy group in the magnesium dialkoxide used therein is a linear alkoxy group containing 6 to 12 carbon atoms or a branched alkoxy group containing 5 to 12 carbon atoms in order that a magnesium alkoxide solution soluble in liquid hydrocarbons can be formed. However, such magnesium alkoxides are difficult to be obtained. CN1177868C discloses a method for preparing an olefin polymerization catalyst precursor, which is prepared by reacting a magnesium alkoxide with a titanium alkoxide in the presence of a clipping agent to form a solid complex. The magnesium alkoxide is magnesium diethoxide, and the titanium alkoxide is titanium tetraethoxide. CN101056894A discloses a catalyst for propylene polymerization, which is prepared by reacting a magnesium dialkoxide with a titanium halide compound or a halogenated silane compound and an internal electron donor in the presence of an organic solvent. The magnesium dialkoxide has a general formula of Mg(OR)₂, wherein R is a C1-C6 alkyl group, and it is prepared by reacting magnesium metal with an alcohol. CN101190953A discloses a method for preparing a solid component of an olefin polymerization catalyst, comprising reacting a magnesium-containing complex of the general formula of ClMg(OR)·n(ROH) with an electron donor compound and a titanium tetrahalide, respectively, in the presence of an inert hydrocarbon. The magnesium-containing complex is prepared by reacting metal magnesium powder with an alcohol, wherein R in the general formula is a C1-C5 alkyl group and n is 0.1 to 1.0.

Patent application CN200910235565 discloses a compound that can be used as an olefin polymerization catalyst carrier and a preparation method thereof. The method comprises heating a magnesium halide, an alcohol compound and an inert dispersion medium to form a magnesium halide-alcohol adduct solution, and then reacting the solution with an oxirane-type compound to form a spherical carrier. Patent application CN2013104913936 teaches the addition of a polymeric dispersion stabilizer in the above-described preparation process of the carrier so that solid particles with good particle morphology and narrow particle size distribution can be obtained without adding an inert dispersion medium, thereby improving the single-pot yield and reducing solvent recovery costs. On this basis, patent applications CN111072804A, CN111072811A, CN107915792A, CN107915793A, CN107915795A, CN109400763A, CN109400778A, and CN111072803A have successively disclosed the addition of metal halides such as zinc halides, chromium halides, manganese halides, iron halides, alkali metal halides in the above-described preparation process of the carrier to improve the particle morphology and polymerization properties of the carrier.

There remains a need for solid components/carriers useful in the preparation of olefin polymerization catalysts that exhibit desirable properties such as good particle morphology.

### Summary of the Invention

An object of the present invention is to provide a solid component useful in the preparation of polyolefin catalysts, which solid component can be used as a carrier for the preparation of an olefin polymerization catalyst, especially a propylene polymerization or copolymerization catalyst. The solid component/carrier of the present invention exhibits good particle morphology, e.g., without the problems of carrier particle agglomeration suffered by the prior art. Further, when used for olefin polymerization, especially propylene polymerization or copolymerization, the catalyst prepared with the solid component as a carrier exhibits high polymerization activity and stereospecificity and/or good hydrogen modulation sensitivity.

A further object of the present invention is to provide a method for preparing the solid component useful in the preparation of polyolefin catalysts. The method of the invention is simple in preparation process and has a low energy consumption in the preparation process.

A still further object of the present invention is to provide a polyolefin catalyst component, which comprises a reaction product of the carrier/solid component of the present invention with a titanium compound and an internal electron donor compound.

A still further object of the present invention is to provide a polyolefin catalyst system.

A still further object of the present invention is to provide an olefin polymerization method.

Other features and advantages of the present invention will be described in detail hereinbelow.

### Brief Description of the Drawings

Figure 1A is an optical microphotograph of the morphology of the solid component particles prepared in Example 1 (with a magnification of 160 times).
Figure 1B is an optical microphotograph of the morphology of the solid component particles prepared in Example 1 (with a magnification of 400 times).
Figure 2 is an optical microphotograph of the morphology of the solid component particles prepared in Example 4 (with a magnification of 160 times).
Figure 3A is an optical microphotograph of the morphology of the solid component prepared in Comparative Example 1 (with a magnification of 160 times).
Figure 3B is an optical microphotograph of the morphology of the solid component prepared in Comparative Example 1 (with a magnification of 400 times).
Figure 4 is an optical microphotograph of the morphology of the solid catalyst component particles prepared in Example 1.
Figure 5 is an optical microphotograph of the morphology of the catalyst component prepared in Comparative Example 1.
Figure 6A is an optical microphotograph of the morphology of the carrier particles prepared in Example 14 with a magnification of 160 times.
Figure 6B is an electron microscope photograph of the carrier particles prepared in Example 14.
Figure 7 is an optical microphotograph of the morphology of the catalyst component prepared in Example 24.
Figure 8A is an optical microphotograph of the morphology of the carrier particles prepared in Example 27 with a magnification of 160 times.
Figure 8B is an optical microphotograph of the morphology of the carrier particles prepared in Example 27 with a magnification of 400 times.
Figure 8C is an electron microscope photograph of the carrier particles prepared in Example 27.

### Detailed Description of the Preferred Embodiments

In a first aspect, the present invention provides a solid component useful in the preparation of polyolefin catalysts, comprising:
(i) a magnesium compound represented by the following formula: 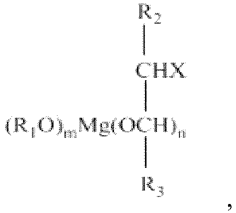 wherein R₁ is a C₁-C₁₂ linear or branched alkyl; R₂ and R₃, which are the same or different, are hydrogen or an unsubstituted or halogenated C₁-C₅ linear or branched alkyl; X is a halogen; m is 0.1-1.9; n is 0.1-1.9; and m+n=2;
(ii) a Lewis base (LB), and
(iii) optionally, a metal component other than magnesium, preferably the other metal component is one or both of iron and cupper; preferably the content of the other metal component in terms of metal in the solid component is from 0 to 1 wt%,

wherein the Lewis base is a compound represented by general formula (II), 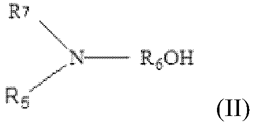
wherein, R₅ and R₇, which are the same or different, is hydrogen or an unsubstituted or hydroxyl-substituted Ci-Cs linear or branched alkyl; R₆ is a C₁-C₈ linear or branched alkylene; or
the Lewis base is an amide compound represented by general formula (II'), 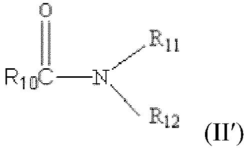
wherein, R₁₀ is hydrogen, amino or a C₁-C₈ linear or branched alkyl, R₁₁ and R₁₂, which are the same or different, is hydrogen or a C₁-C₈ linear or branched alkyl.

In the present disclosure, the terms "solid component useful in the preparation of polyolefin catalysts" and "carrier useful in the preparation of polyolefin catalysts (or simply "carrier ")" are used interchangeably.

In some embodiments, the carrier of the present invention comprises a composition represented by the general formula (I), the general formula (I') or the general formula (I"), or have a composition represented by the general formula (I), the general formula (I') or the general formula (I"): 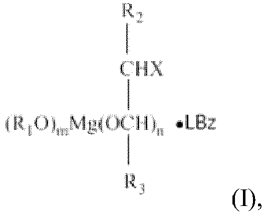 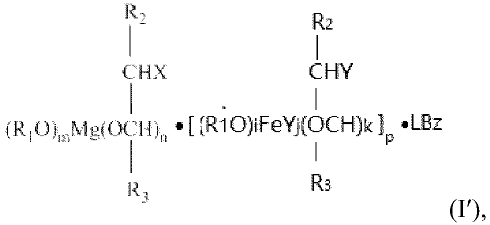 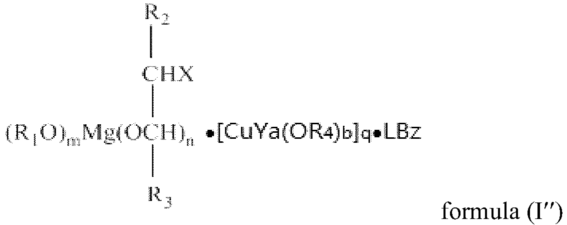
wherein in the formula (I'), R₁ is a C₁-C₁₂ linear or branched alkyl; R₂ and R₃ which are the same or different. are hydrogen or an unsubstitued or halogenated C₁-C₅ linear or branched alkyl; X and Y independently represent a halogen; m is 0.1-1.9; n is 0.1-1.9; m+n=2; 0<i≤2; 0<j≤2; 0<k≤2; i+j+k=3; 0<p≤0.1; and 0<z<0.1;
in the formula (I), R₁ is a C₁-C₁₂ linear or branched alkyl; R₂ and R₃ which are the same or different, are hydrogen or and unsubstituted or halogenated C₁-C₅ linear or branched alkyl; X is a halogen; m is 0.1-1.9; n is 0.1-1.9; m+ n=2; and 0<z<0.5;
in the formula (I''), R₁ is a C₁-C₁₂ linear or branched alkyl; R₂ and R₃, which are the same or different, are hydrogen or an unsubstituted or halogenated C₁-C₅ linear or branched alkyl, X and Y independently represent a halogen; m is 0.1-1.9; n is 0.1-1.9; m+n=2; 0≤a<2, 0<b≤2, a+b=2; 0<q<0.1; and 0≤z<0.1;
LB is a compound represented by general formula (II), 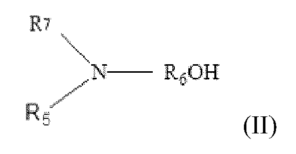
wherein, R₅ and R₇, which are the same or different, are hydrogen or an unsubstituted or hydroxyl-substituted Ci-Cs linear or branched alkyl; R₆ is a C₁-C₈ linear or branched alkylene.

As those skilled in the art could understand, the above-described general formula (I) represents a composition consisting of the magnesium compound 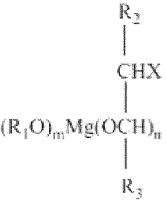 and LB in the specified molar ratio. Likewise, the general formula (I') represents a composition consisting of 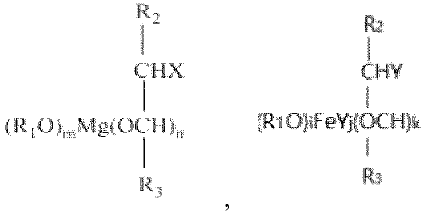 and LB in the specified molar ratio. Likewise, the general formula (I") represents a composition consisting of 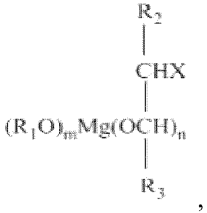 CuYa(OR₄)b and LB in the specified molar ratio.

In some embodiments, the carrier of the present invention comprises a composition represented by the general formula (I‴), or have a composition represented by the general formula (I‴): 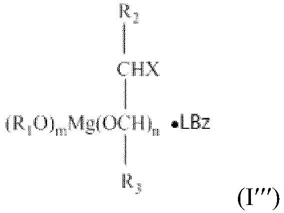
wherein, R₁ is a C₁-C₁₂ linear or branched alkyl; R₂ and R₃, which are the same or different, are hydrogen or an unsubstituted or halogenated C₁-C₅ linear or branched alkyl; X is a halogen; m is 0.1-1.9; n is 0.1-1.9; m+n=2; 0<z<0.5; LB is an amide compound represented by the general formula (II'), 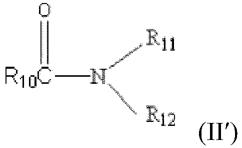
wherein, R₁₀ is hydrogen, amino or a C₁-C₈ linear or branched alkyl, R₁₁ and R₁₂, which are the same or different, are hydrogen or a Ci-Cs linear or branched alkyl.

As those skilled in the art could understand, the above-described general formula (I‴) represents a composition consisting of the magnesium compound 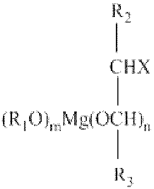 and LB in the specified molar ratio.

In some embodiments of the present disclosure, R₁ is a C₁-C₈ linear or branched alkyl. Preferably, R₁ is selected from the group consisting of ethyl, n-propyl, isopropyl, n-butyl, isobutyl, n-pentyl, isopentyl, n-hexyl, n-octyl and 2-ethylhexyl.

In some embodiments of the present disclosure, R₂ and R₃ are each independently hydrogen, a C₁-C₃ linear or branched alkyl or halogenated C₁-C₃ linear or branched alkyl. Preferably, R₂ and R₃ are each independently methyl, ethyl, chloromethyl, chloroethyl, bromomethyl or bromoethyl.

In some embodiments of the present disclosure, R₅ and R₇ are hydrogen or a C₁-C₅ linear or branched alkyl, R₆ is a C₁-C₅ linear or branched alkylene. In some embodiments, R₅ and R₇ are independently hydrogen, methyl, ethyl, isopropyl, n-propyl, tert-butyl or isobutyl. In some embodiments, R₆ is methylene, ethylene or propylene.

In some embodiments of the present disclosure, the compound represented by the general formula (II) useful in the present disclosure is one or more selected from the group consisting of ethanolamine, diethanolamine, triethanolamine, N,N-dimethylethanolamine, N,N-diethylethanolamine and N-methyldiethanolamine.

In some embodiments of the present disclosure, R₁₀ is hydrogen, amino or a C₁-C₅ linear or branched alkyl, R₁₁ and R₁₂ are hydrogen or a C₁-C₅ linear or branched alkyl.

In some embodiments of the present disclosure, the amide compound represented by the general formula (II') useful in the present disclosure is one or more selected from the group consisting of formamide, acetamide, propionamide, N-methylacetamide, N,N-dimethylacetamide and carbonamide.

In the context of this application, the halogen is selected from the group consisting of fluorine, chlorine, bromine and iodine, preferably chlorine.

According to the present invention, the carrier can further comprise a metal component other than magnesium, such as a transition metal component. Preferably, the other metal component is one or both of iron and copper.

According to some embodiments of the present invention, the content of the other metal component in the solid component, on weight basis, is from 0 to 1%.

According to some embodiments of the present invention, the carrier is spherical. As used herein, the term "spherical" means that the carrier has a sphere-like particle morphology, without requiring the carrier to have a perfectly spherical morphology.

In some embodiments, the carrier has an average particle size of from 10 to 100 microns, preferably from 30 to 70 microns, and a particle size distribution of less than 1.2, preferably from 0.7 to 0.9.

In a second aspect, the present invention provides a method for preparing the carrier for polyolefin catalysts, comprising the steps of:
(a) reacting a magnesium halide represented by general formula MgX₂, an optional metal halide, an alcohol compound represented by general formula R₁OH, and a compound represented by general formula (II) or (II') to form a solution, 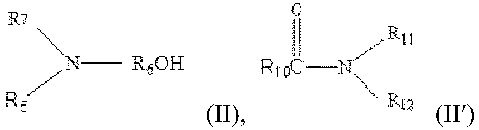 wherein X is a halogen; R₁ is a C₁-C₁₂ linear or branched alkyl; R₅ and R₇, which are the same or different, are hydrogen or an unsubstituted or hydroxyl-substituted C₁-C₈ linear or branched alkyl; R₆ is a Ci-Cs linear or branched alkylene; R₁₀ is hydrogen, amino or a C₁-C₈ linear or branched alkyl; and R₁₁ and R₁₂, which are the same or different, are hydrogen or a Ci-Cs linear or branched alkyl;
(b) reacting the solution formed in step (a) with an epoxy compound to directly generate spherical solid particles; and
(c) recovering the spherical solid particles formed in step (b).

Here, the expression "directly generate spherical solid particles" has the following meanings:
(1) the solid particles are precipitated through chemical reaction, that is, in the preparation, the solid particles are directly precipitated, through chemical reaction, from the original system, and there is no need to use other means such as vaporizing a solvent or altering system temperature (such as spray drying, reducing system temperature) to precipitate solid particles from the reactants; and
(2) the acquirement of the shape (typically spherical shape) of the solid particles can be achieved without needing to introduce an inert carrier material having good particle morphology (for example, SiO₂, metal oxides, or the like) in the preparation.

In a sub-aspect of this aspect, the method comprises the steps of:
(a) reacting the magnesium halide represented by the general formula MgX₂, an optional metal halide of the structure formula FeY₂ or an optional metal halide of the structure formula CuYc, the alcohol compound represented by the general formula R₁OH and the compound represented by the general formula (II) to form a solution, 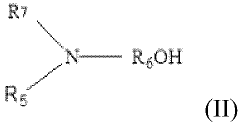 wherein R₁ is a C₁-C₁₂ linear or branched alkyl, R₅ and R₇, which are the same or different, are hydrogen or an unsubstituted or hydroxyl-substituted Ci-Cs linear or branched alkyl; R₆ is a C₁-C₈ linear or branched alkylene, X and Y are a halogen, and c=1 or 2, preferably 1;
(b) reacting the solution formed in step (a) with an epoxy compound to directly generate spherical solid particles; and
(c) recovering the spherical solid particles formed in step (b).

In another sub-aspect of this aspect, the method comprises the steps of:
(a) reacting the magnesium halide represented by the general formula MgX₂ with the alcohol compound represented by the general formula R₁OH and the amide compound represented by the general formula (II') to form a solution, 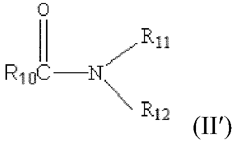 wherein R₁ is a C₁-C₁₂ linear or branched alkyl, R₁₀ is hydrogen, amino or a Ci-Cs linear or branched alkyl, R₁₁ and R₁₂, which are the same or different, are hydrogen or a Ci-Cs linear or branched alkyl, and X is a halogen;
(b) reacting the solution formed in step (a) with an epoxy compound to directly generate solid particles; and
(c) recovering the solid particles formed in step (b).

In some embodiments of this aspect, R₁ is a C₁-C₈ linear or branched alkyl, preferably a C₁-C₆ linear or branched alkyl. According to some specific embodiments, R₁ is selected from the group consisting of ethyl, n-propyl, isopropyl, n-butyl, isobutyl, n-pentyl, isopentyl, n-hexyl, n-octyl and 2-ethylhexyl. According to some preferred embodiments of the present invention, the R₁OH compound used in step (a) may be one or more of the alcohol compounds. Specific examples of the alcohol include methanol, ethanol, propanol, isopropanol, n-butanol, isobutanol, pentanol, isopentanol, n-hexanol, n-octanol, 2-ethyl-1-hexanol.

In some embodiments of this aspect, R₅ and R₇ are hydrogen or a C₁-C₅ linear or branched alkyl, and R₆ is a C₁-C₅ linear or branched alkylene. In some embodiments, R₅ and R₇ are hydrogen or methyl, ethyl, isopropyl, n-propyl, tert-butyl, isobutyl or the like. In some embodiments, R₆ is methylene, ethylene, propylene or the like. According to some embodiments of the present invention, the compound represented by the general formula (II) is one or more selected from the group consisting of ethanolamine, diethanolamine, triethanolamine, N,N-dimethylethanolamine, N,N-diethylethanolamine and N-methyldiethanolamine.

In some embodiments of this aspect, R₁₀ is hydrogen, amino or a C₁-C₅ linear or branched alkyl, and R₁₁ and R₁₂ are hydrogen or a C₁-C₅ linear or branched alkyl. According to some embodiments of the present invention, the amide compound is one or more selected from the group consisting of formamide, acetamide, propionamide, N-methylacetamide, N,N-dimethylacetamide and carbonamide.

In some embodiments of this aspect, the epoxy compound is preferably represented by general formula (III), 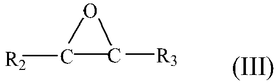 wherein R₂ and R₃ are the same or different, and are hydrogen or an unsubstituted or halogenated C₁-C₅ linear or branched alkyl. Preferably, R₂ and R₃ are each independently hydrogen, a C₁-C₃ linear or branched alkyl or a halogenated C₁-C₃ linear or branched alkyl. Preferably, R₂ and R₃ are each independently methyl, ethyl, chloromethyl, chloroethyl, bromomethyl or bromoethyl.

In some embodiments of this aspect, in step (a), a polymeric dispersion stabilizer is added during the preparation of the solution, and its weight average molecular weight is greater than 1000, preferably greater than 3000.

In some embodiments of this aspect, the magnesium halide of the general formula MgX₂ used in step (a) is one or more of magnesium dichloride, magnesium dibromide and magnesium diiodide.

In some embodiments of this aspect, a metal halide, preferably a reductive metal halide, may be added in said step (a). For example, the metal halide can be selected from those having the structural formula MYₐ, wherein M is a transition metal, Y is a halogen, and a is 1 or 2. In some specific embodiments, M is copper, and a=1. In other specific embodiments, M is iron, and a=2. Preferred metal halides are CuCl and FeCl₂.

In some embodiments of this aspect, the metal halide optionally used in step (a) is one or more selected from the group consisting of ferrous chloride, ferrous bromide, ferrous iodide, and hydrates thereof such as ferrous chloride tetrahydrate, preferably ferrous chloride and its hydrates.

In some embodiments of this aspect, the metal halide optionally used in step (a) is a copper halide, preferably a cuprous halide, most preferably cuprous chloride. It has been found that when the cuprous halide is used in the above preparation method, the cuprous halide is insoluble (or slightly soluble) in the reaction system so that the mixture formed in step (a) is a suspension. Surprisingly, the particle size of the final carrier particles can be significantly affected by the amount of the metal halide added within a certain range.

In some embodiments of this aspect, the prepared carrier has an average particle size of from 10 to 100 microns, preferably from 30 to 70 microns.

In some embodiments of this aspect, the prepared carrier has a particle size distribution of less than 1.2, preferably from 0.7 to 0.9.

In some embodiments of this aspect, the preparation of the solution in said step (a) is carried out at a temperature of from 30 to 160 °C, preferably from 40 to 120 °C. According to some embodiments of the present invention, the amount of the R₁OH compound added ranges from 3 to 30 moles, preferably from 4 to 25 moles, relative to one mole of magnesium. According to some embodiments of the present invention, the molar ratio of the compound represented by the general formula (II) or (II') to the magnesium halide is from 1:200 to 1:10, preferably from 1:200 to 1: 2, for example, from 1:100 to 1:5, preferably from 1:50 to 1:50. According to some preferred embodiments of the present invention, step (a) is carried out in a closed vessel. According to some preferred embodiments of the present invention, in step (a), the order of adding the raw materials during the preparation of the solution is not specific.

In some embodiments of this aspect, the amount of the metal halide added ranges from 0.001 to 0.1 moles, preferably from 0.003 to 0.08 moles, relative to one mole of magnesium.

According to some embodiments of the present invention, an inert dispersion medium may or may not be added during the preparation of the solution in step (a). The inert dispersion medium can be one or a mixture of liquid aliphatic, aromatic or cycloaliphatic hydrocarbons and silicone oils. The ratio (by volume) of the amount of the inert dispersion medium added to the amount of the R₁OH added is from 0 to 5:1, preferably from 0 to 2:1.

According to some preferred embodiments of the present invention, examples of the MgX₂ compound used in step (a) include, but are not limited to, magnesium dichloride, magnesium dibromide, and magnesium diiodide, among which magnesium dichloride is preferred. The MgX₂ compounds can be used separately or in combination.

According to some preferred embodiments of the present invention, the trace amount of water in the individual raw materials added in step (a) can participate in the reaction to form the solution.

According to some preferred embodiments of the present invention, specific examples of the epoxy compound used in step (b) include ethylene oxide, propylene oxide, butylene oxide, epichlorohydrin, epoxy chlorobutane, epoxy bromopropane, epoxy bromobutane, etc.

According to some preferred embodiments of the present invention, the reaction temperature in step (b) ranges from 30 to 160 °C, preferably from 40 to 120°C.

According to some preferred embodiments of the present invention, the amount of the ethylene oxide-type compound added in step (b) is from 1 to 10 moles, preferably from 2 to 6 moles, relative to one mole of magnesium.

In order to obtain particles with better particle morphology, it is preferred to add at least one polymeric dispersion stabilizer during the preparation of the solution in step (a), with the weight average molecular weight of the polymeric dispersion stabilizer being greater than 1000, preferably greater than 3000, for example up to 2,000,000 or up to 1,000,000. Particularly, the polymeric dispersion stabilizer may be at least one chosen from polyacrylates, styrene-maleic anhydride copolymers, polystyrene sulfonates, naphthalenesulfonic acid-formaldehyde condensation products, condensed alkyl phenyl ether sulfates, condensed alkylphenol polyoxyethylene ether phosphates, oxyalkyl acrylate copolymer-modified polyethyleneimines, poly(1-dodecyl-4-vinylpyridinium bromide)s, poly(vinylbenzyl trimethyl ammonium salt)s, poly(vinyl alcohol)s, polyacrylamides, ethylene oxide-propylene oxide block copolymers, polyvinylpyrrolidones, poly(vinylpyrrolidone-co-vinyl acetate)s, poly(ethylene glycol)s, alkylphenyl polyoxyethylene ethers and poly(alkyl methacrylate)s, preferably at least one of polyvinylpyrrolidones, poly(vinylpyrrolidone-co-vinyl acetate)s and poly(ethylene glycol)s.

According to some preferred embodiments of the present invention, the amount of the polymeric dispersion stabilizer is from 0.1 to 10 percent by weight, preferably from 0.2 to 5 percent by weight, based on the combined amount of the magnesium compound and the R₁OH compound.

According to the present invention, the preparation method further comprises step (c) of recovering the resultant solid particles. The recovering of the solids in step (c) refers to the obtaining of solid particles by using solid-liquid separation techniques known in the art, such as filtration, decanting, centrifugal separation and other operations, and also includes washing the obtained spherical carrier particles with a hydrocarbon solvent and drying. The inert hydrocarbon solvent is preferably a straight-chain or branched-chain liquid alkane with a carbon chain length greater than 4 carbons or an aromatic hydrocarbon, such as hexanes, heptanes, octanes, decanes, toluene, and the like.

In a preferred embodiment, the method for preparing the carrier comprises:
(1) in a closed vessel, in the presence of at least one polymeric dispersion stabilizer, allowing the mixture of the magnesium halide MgX₂, the organic alcohol R₁OH, the optional metal halide of structure formula FeY₂ or the optional metal halide of structure formula CuYc, and the compound of the general formula (II) to react at 30 to 160 °C (preferably 40 to 120 °C) for 0.1 to 5 hours (preferably 0.5 to 2 hours) to form a solution;
(2) reacting the above solution with the alkylene oxide compound represented by the formula (III) at 30 to 160 °C (preferably 40 to 120 °C) for 0.1 to 5 hours (preferably 0.2 to 1 hour), to directly precipitate solid particles;
(3) recovering the solid particles by a solid-liquid separation technology to obtain a spherical carrier.

In a more preferred embodiment, the method for preparing the carrier comprises:
(1) in a closed vessel, heating a mixture of the magnesium halide, the organic alcohol, the optional metal halide of structure formula FeY₂ or the optional metal halide of structure formula CuYc, the compound of the general formula (II), and the at least one polymeric dispersion stabilizer with stirring to a temperature of from 30 to 160 °C, preferably 40 to 120 °C, and allowing the mixture to react for 0.1 to 5 hours, preferably 0.5 to 2 hours, to form a mixture solution, wherein the amount of the organic alcohol is 3 to 30 moles, preferably 4 to 25 moles, and the amount of the compound of the general formula (II) is 0.005 to 0.1 moles, preferably 0.005 to 0.05 moles, relative to one mole of magnesium; wherein the amount of the metal halide of structure formula FeY₂ or the metal halide of structure formula CuYc is preferably 0.01 to 0.1 moles, more preferably 0.01 to 0.05 moles, relative to one mole of magnesium; and wherein the amount of the polymeric dispersion stabilizer is from 0.1 to 10 wt%, preferably from 0.2 to 5 wt%, based on the combined amount of the magnesium halide and the organic alcohol;
(2) adding the alkylene oxide compound represented by the formula (III) to the above mixture solution with stirring, and allowing the mixture to react at 30 to 160 °C (preferably 40 to 120 °C) for 0.1 to 5 hours (preferably 0.2 to 1 hour), to directly generate the solid particles, wherein the amount of the alkylene oxide compound used is 1 to 10 moles, preferably 2 to 6 moles, relative to one mole of magnesium; and
(3) recovering the solid particles by a solid-liquid separation technology to obtain a spherical carrier.

In a preferred embodiment, the method for preparing the solid component comprises:
(1) in a closed vessel, in the presence of at least one polymeric dispersion stabilizer, allowing the mixture of the magnesium halide MgX₂, the organic alcohol R₁OH, and the compound of the general formula (II') to react at 30 to 160 °C (preferably 40 to 120 °C) for 0.1 to 5 hours (preferably 0.5 to 2 hours) to form a solution;
(2) reacting the above solution with the alkylene oxide compound represented by the formula (III) at 30 to 160 °C (preferably 40 to 120 °C) for 0.1 to 5 hours (preferably 0.2 to 1 hour), to directly precipitate solid particles;
(3) recovering the solid particles by a solid-liquid separation technology to obtain a spherical carrier.

In a preferred embodiment, a metal halide having the structure of MYₐ is also added in the above-described step (1).

In a more preferred embodiment, the method for preparing the spherical carrier comprises:
(1) in a closed vessel, heating a mixture of the magnesium halide, the organic alcohol, the compound of the general formula (II'), and the at least one polymeric dispersion stabilizer with stirring to a temperature of from 30 to 160 °C, preferably 40 to 120 °C, and allowing the mixture to react for 0.1 to 5 hours, preferably 0.5 to 2 hours, to form a mixture solution, wherein the amount of the organic alcohol is 3 to 30 moles, preferably 4 to 25 moles, and the amount of the compound of the general formula (II') is 0.01 to 0.5 moles, preferably 0.02 to 0.3 moles, relative to one mole of magnesium; and wherein the amount of the polymeric dispersion stabilizer is from 0.1 to 10 wt%, preferably from 0.2 to 5 wt%, based on the combined amount of the magnesium halide and the organic alcohol; and wherein a metal halide of the structure MYₐ is also optionally added in this step and, if used, the metal halide is added in an amount of 0.01 to 0.1 moles, preferably 0.01 to 0.05 moles, relative to one mole of magnesium;
(2) adding the alkylene oxide compound represented by the formula (III) to the above mixture solution with stirring, and allowing the mixture to react at 30 to 160 °C (preferably 40 to 120 °C) for 0.1 to 5 hours (preferably 0.2 to 1 hour), to directly generate the solid particles, wherein the amount of the alkylene oxide compound used is 1 to 10 moles, preferably 2 to 6 moles, relative to one mole of magnesium; and
(3) recovering the solid particles by a solid-liquid separation technology to obtain a spherical carrier.

In the above-described preferred embodiments, the recovering of the solid particles can be carried out by conventional solid-liquid separation techniques in the art, for example, filtration, decanting, centrifugal separation or the like. Furthermore, step (3) may further comprise washing the obtained spherical carrier particles with an inert hydrocarbon solvent and drying. The inert hydrocarbon solvent is preferably a straight-chain or branched-chain liquid alkane with a carbon chain length greater than 4 carbons or an aromatic hydrocarbon, such as hexanes, heptanes, octanes, decanes, toluene, and the like.

The present invention further provides the solid component prepared by the above-described preparation methods. According to some embodiments of the present invention, the solid component is spherical, and has an average particle size of from 10 to 100 microns, preferably from 30 to 70 microns, and a particle size distribution of less than 1.2, preferably from 0.7 to 0.9.

The present invention further provides a catalyst component for olefin polymerization, which comprises a reaction product of the carrier/solid component as described herein and/or the solid component prepared by the preparation methods as described herein with a titanium compound and an internal electron donor compound. The synthesis of the catalyst component can adopt a known synthesis method, such as the method as described in Chinese patent CN1091748 by directly reacting the spherical magnesium-containing composition particles with a titanium halide; or the method as described in Chinese patent CN201310469927 by reacting the spherical magnesium-containing composition with an alkoxytitanium compound having a structural formula of Ti(OR)₄ first to obtain an intermediate product and then reacting the intermediate product with a titanium halide. In the above-described preparation processes of the catalyst, it is usual to optionally add some internal electron donor compounds known in the art according to the needs of practical application.

The present invention further provides a catalyst system for olefin polymerization comprising the catalyst component, an alkylaluminum compound, and optionally an external electron donor compound.

The present invention further provides a method for olefin polymerization, comprising contacting one or more olefins with the catalyst system under olefin polymerization conditions. In an embodiment of the present invention, the olefin is of the general formula of CH₂=CHR, wherein R is hydrogen or a C₁ to C₇ alkyl. Preferably, the olefin is one or more of ethylene, propylene, 1-butene, 4-methyl-1-pentene and 1-hexene.

The present invention has some or all of the following advantages: (1) the solid component having the composition set forth in the present invention has an improved particle morphology, thereby reducing particle agglomeration; (2) when used for olefin polymerization, especially propylene polymerization or copolymerization, the catalyst prepared by using the solid component of the present invention as a carrier has a high stereospecificity; (3) the catalyst prepared by using the solid component of the present invention as a carrier has a high strength and less break-up; (4) by adding the reductive metal halide and the electron donor compound with specific structure to the reaction system, it can be realized to adjust the particle size of the carrier without changing the stirring speed, especially to obtain a carrier having a small particle size (< 40 µm) without changing the stirring speed; (5) the carrier preparation method is stable.

### Examples

The following examples are provided to further illustrate the present invention and by no means intend to limit the scope thereof.

### Testing methods:

1. Melt index of polymers: measured according to ASTM D1238-99, at 230 °C and 2.16kg load.
2. Isotacticity of polymers: measured by heptane extraction method (boiling heptane extraction for 6 hours) carried out as follows: 2 g of dry polymer sample is extracted with boiling heptane in an extractor for 6 hours, then the residual substance is dried to constant weight, and the ratio of the weight of the residual polymer (g) to 2 (g) was regarded as isotacticity.
3. Particle size distribution: average particle size and particle size distribution of the carrier particles are measured on Masters Sizer Model 2000 particle sizer (manufactured by Malvern Instruments Co., Ltd.), with the dispersion medium being n-hexane. Particle size distribution value SPAN=(D90-D10)/D50.
4. The apparent morphology of the carrier for olefin polymerization catalyst is observed by Eclipse E200 optical microscope purchased from Nikon Company, with a magnification of 160 times or 400 times, or by XL-30 field emission environmental scanning electron microscope from FEI Company, USA.
5. The content of metal elements in the carrier: measured by using Agilent ICP-MS 7500CX inductively coupled plasma mass spectrometer from Agilent Company, USA, wherein the carrier has been dissolved in a concentrated nitric acid and then let stand for 12 hours prior to the measurement.
6. Activity of catalyst = weight of polymer obtained/weight of catalyst used.
7. 1H-NMR measurement is performed by using an AVANCE 300 nuclear magnetic resonance spectrometer from Bruker Co., Switzerland. About 100 mg of the sample to be tested is taken into a 2 mL sampling bottle in a glove box with dry nitrogen flow, and then 1 mL of deuterated toluene and 100 µL of tri-n-butyl phosphate or triisobutyl phosphate are added to the sampling bottle. The sampling bottle is sealed with a sealing film, ultrasonically treated in a 60°C water bath for 0.5 h, and then let stand for several minutes. Then, about one-tenth of the transparent liquid is taken into an NMR tube. Additional deuterated toluene is added to the NMR tube until the total volume of the liquid in the NMR tube is 0.5 mL, and the sample is ready for test.
8. Content of electron donor in the carrier: measured by using TraceGC Ultra chromatograph and DSQ II mass spectrometer from Thermo Fisher Company, USA, wherein the column is an HP-5 capillary column with a column length of 30 m, methanol is used as a solvent for the sample, the heating rate is 10 °C/min, and the vaporization temperature is 200 °C.

### A-1. Preparation of spherical carriers

### Example 1

In a 1.0L reaction kettle, 1.6g of polyvinylpyrrolidone (PVP, having a weight average molecular weight of 58000), 2.8 mol of ethanol, 0.2 mol of magnesium chloride, and 0.015 mol of formamide were successively added, and the temperature was raised to 70°C under stirring (450 rpm). After 1 hour of constant temperature reaction, 0.6 mol of epichlorohydrin was added, the temperature was maintained for 0.5 hours, and the liquid was then filtered off. The solids were washed 5 times with hexane, and dried in vacuum to obtain solid component particles. Through characterization by nuclear magnetic resonance, elemental analysis and gas chromatography, the composition of the solid component particles was found to be:

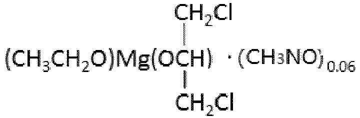

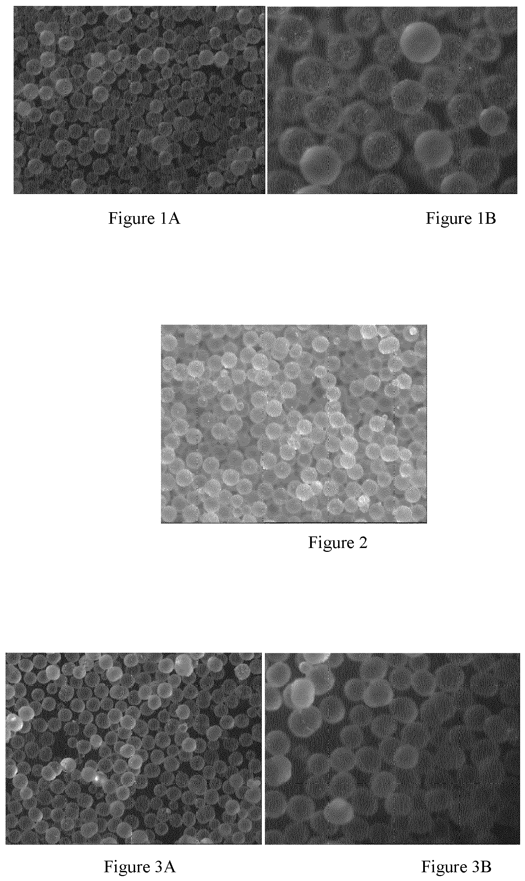

The solid component particles have a particle size distribution of D50 = 63.5 µm and span = 0.67, and the particle morphology is shown in Figures 1A (160 times) and 1B (400 times) .

### Example 2

Preparation method was the same as described for Example 1, except that the amount of the formamide was 0.03 mol and the reaction temperature was 80°C. Through characterization by nuclear magnetic resonance, elemental analysis and gas chromatography, the composition of the solid component particles was found to be:

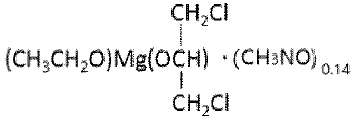

The solid component particles have a particle size distribution of D50 = 45.2 µm and span = 0.65.

### Example 3

Preparation method was the same as described for Example 1, except that the amount of the formamide was 0.005 mol. Through characterization by nuclear magnetic resonance, elemental analysis and gas chromatography, the composition of the solid component particles was found to be:

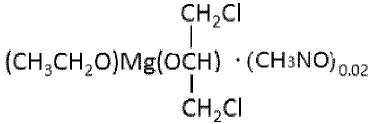

The carrier has a particle size distribution of D50 = 78.5 µm and span = 0.67.

### Example 4

Preparation method was the same as described for Example 1, except that 2 mmol of ferrous chloride was additionally added. Through characterization by nuclear magnetic resonance, elemental analysis and gas chromatography, it was found that the solid component particles had the same main composition as that of Example 1 and contained 0.046 wt% of Fe.

The solid component particles have a particle size distribution of D50 = 61.4 µm and span = 0.69, and the particle morphology is shown in Figure 2.

### Example 5

Preparation method was the same as described for Example 4, except that the amount of the added ferrous chloride was 9 mmol. Through characterization by nuclear magnetic resonance, elemental analysis and gas chromatography, it was found that the solid component particles had the same main composition as that of Example 1 and contained 0.59 wt% of Fe.

The solid component particles have a particle size distribution of D50 = 47.1 µm and span = 0.76.

### Example 6

Preparation method was the same as described for Example 1, except that 5 mmol of cuprous chloride was additionally added. Through characterization by nuclear magnetic resonance, elemental analysis and gas chromatography, it was found that the solid component particles had the same main composition as that of Example 1 and contained 0.038 wt% of Cu.

The solid component particles have a particle size distribution of D50 = 53.1 µm and span = 0.68.

### Example 7

Preparation method was the same as described for Example 1, except that the 0.015 mol of formamide was replaced with 0.02 mol of N,N-dimethylacetamide. Through characterization by nuclear magnetic resonance, elemental analysis and gas chromatography, the main composition of the solid component particles was found to be:

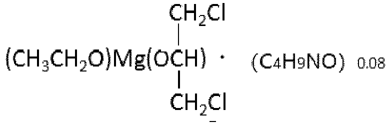

The solid component particles have a particle size distribution of D50 = 65.1µm and span = 0.65.

### Example 8

Preparation method was the same as described for Example 1, except that the 0.015 mol of formamide was replaced with 0.02 mol of N-methylacetamide. Through characterization by nuclear magnetic resonance, elemental analysis and gas chromatography, the main composition of the solid component particles was found to be:

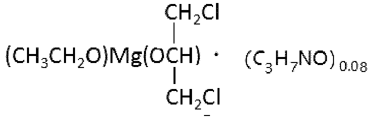

The solid component particles have a particle size distribution of D50 = 57.8 µm and span = 0.67.

### Example 9

Preparation method was the same as described for Example 1, except that the amount of the formamide added was changed to 0.04 mol and the reaction temperature was 60°C. Through characterization by nuclear magnetic resonance, elemental analysis and gas chromatography, the composition of the solid component particles was found to be:

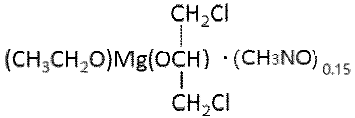

The solid component particles have a particle size distribution of D50 = 43.6 µm and span = 0.66.

### Example 10

Preparation method was the same as described for Example 1, except that the 0.015 mol of formamide was replaced with 0.01 mol of carbonamide. Through characterization by nuclear magnetic resonance, elemental analysis and gas chromatography, the composition of the solid component particles was found to be:

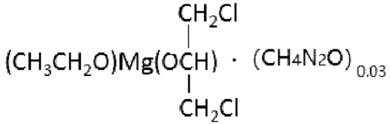

The solid component particles have a particle size distribution of D50 = 65.3 µm and span = 0.65.

### B-1. Preparation of spherical catalyst components

### Example 11

### (1) Preparation of intermediate reaction product

In a 300 mL glass reaction flask with mechanical stirring, under nitrogen atmosphere, 10 g of the solid component particles prepared in Example 1 were dispersed in 100 mL of hexane, cooled to -10 °C, and maintained for 0.5 hr. Then, 2.5 ml of tetraethyl titanate (TET) (corresponding to a molar ratio of TET/Mg = 0.2) was added thereto, and the temperature was slowly raised to 60°C and maintained for 0.5hr. The liquid was filtered off, and the solids were washed three times with hexane and then dried under vacuum to afford an intermediate product.

### (2) Preparation of catalyst component

Under an inert atmosphere, 100 ml of titanium tetrachloride was added to a 300 mL glass reaction flask and cooled to -20°C, and 8 g of the intermediate product prepared above was added thereto. The temperature was raised to 110°C, and 1.5 ml of diisobutyl phthalate was added during the heating process. The liquid was filtered off, and the solids were washed twice with titanium tetrachloride and three times with hexane, and dried under vacuum to obtain a spherical catalyst component.

### (3) Propylene polymerization

A liquid phase bulk polymerization of propylene was carried out in a 5L stainless steel autoclave. Under nitrogen protection, 5 ml of triethylaluminum solution in hexane (having a concentration of 0.5 mmol/ml), 1 ml of cyclohexylmethyldimethoxysilane (CHMMS) solution in hexane (having a concentration of 0.1 mmol/ml) and 9 mg of the above spherical catalyst component were successively added to the autoclave. The autoclave was closed and an amount of hydrogen (standard volume) and 2.3 L of liquid propylene were added thereto. The temperature was raised to 70°C, and the reaction was performed for 1 hour. Then, the temperature was lowered, the pressure was relieved, the materials were discharged, and the resultant propylene homopolymer was dried and weighed. The results are shown in Table 1.

### Example 12

The procedure of Example 11 was repeated, except that the solid component particles used were those prepared in Example 6.

### Example 13

The procedure of Example 10 was repeated, except that the solid component particles used were those prepared in Example 7.

### Comparative Example 1

The preparation of spherical carrier was the same as described for Example 1, except that the amide compound of the general formula (II) was not added. The morphology of the solid component particles is shown in Figures 3A (160 times) and 3B (400 times), and it can be seen from the figures that some solid component particles adhere to each other to form irregular particles.

Catalyst preparation and propylene polymerization were performed as described in Example 11, and the polymerization results are shown in Table 1.

It can be seen from the particle size distributions of the above solid components and the results of the accompanying drawings that the present invention improves the particle morphology of the carrier by adding the amide compound represented by the general formula (II) during the preparation of the carrier, and further reduces the particle agglomeration.

**Table 1. Properties of catalysts prepared by using the example carriers**

| Example No. | Amount of H₂ added NL | Polymerization activity KgPP/gCat | Polymer isotacticity, I.I wt% | Polymer melt index, MI g/10min |
|---|---|---|---|---|
| Ex. 11 | 1.5 | 37.7 | 98.3 | 5.0 |
| | 5.0 | 46.1 | 98.0 | 21.7 |
| | 6.5 | 43.3 | 97.3 | 29.0 |
| Ex. 12 | 1.5 | 38.6 | 97.6 | 7.5 |
| Ex. 13 | 1.5 | 37.5 | 97.8 | 11.0 |
| Comp. Ex. 1 | 1.5 | 45.2 | 97.5 | 6.5 |
| | 6.5 | 46.6 | 95.8 | 35.1 |

It can be seen from the results in Table 1 that the addition of amide compounds during the preparation of the carrier can improve the stereospecificity of the catalyst and has little effect on the polymerization activity of the catalyst.

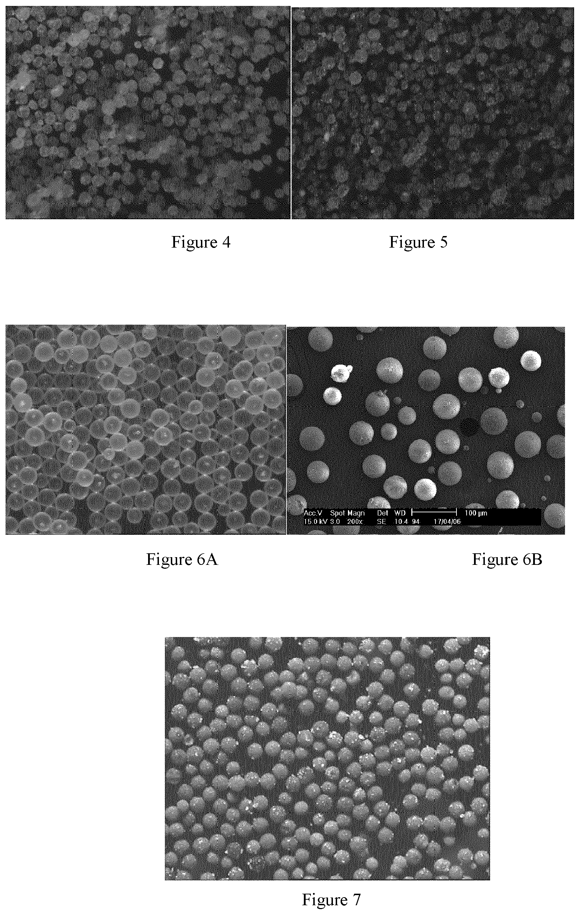

The picture of the catalyst component of the Example 1 is shown in FIG. 4, and the picture of the catalyst component of the Comparative Example 1 is shown in FIG. 5. It can be seen from the figures that the catalyst prepared by using the solid component particles with the added compound of the general formula (II) as a carrier is less broken.

### A-2. Preparation of spherical carrier

### Example 14

In a 1.0L reaction kettle, 1.6g of polyvinylpyrrolidone (PVP, having a weight average molecular weight of 58000), 2.8 mol of ethanol, 0.2 mol of magnesium chloride, 2 mmol of ferrous chloride, and 2 mmol of triethanolamine were successively added, and the temperature was raised to 70°C under stirring (450 rpm). After 1 hour of constant temperature reaction, 0.6 mol of epichlorohydrin was added, the temperature was maintained for 0.5 hours, and the liquid was then filtered off. The solids were washed 5 times with hexane, and dried in vacuum to obtain solid component particles. Through characterization by nuclear magnetic resonance, elemental analysis and gas chromatography, it was found that the carrier had the following structure:

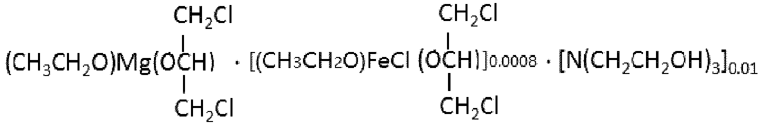

The carrier has a particle size distribution of D50 = 71.1 µm and span = 0.65, and the particle morphology is shown in FIG. 6A (an optical microphotograph, 160 times) and FIG. 6B (an electron microscope photograph).

### Example 15

The preparation method was the same as described in Example 14, except that the amount of the ferrous chloride added was 4 mmol. Through characterization by nuclear magnetic resonance, elemental analysis and gas chromatography, it was found that the carrier had the following structure:

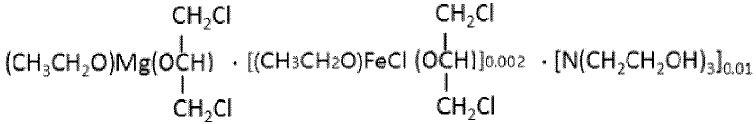

The carrier has a particle size distribution of D50 = 68.2 µm and span = 0.67.

### Example 16

The preparation method was the same as described in Example 14, except that the amount of the ferrous chloride added was 8 mmol. Through characterization by nuclear magnetic resonance, elemental analysis and gas chromatography, it was found that the carrier had the following structure:

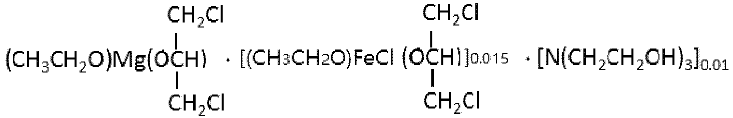

The carrier has a particle size distribution of D50 = 39.8 µm and span = 0.68.

### Example 17

The preparation method was the same as described in Example 14, except that the reaction temperature was 80 °C. Through characterization by nuclear magnetic resonance, elemental analysis and gas chromatography, it was found that the carrier had the following structure:

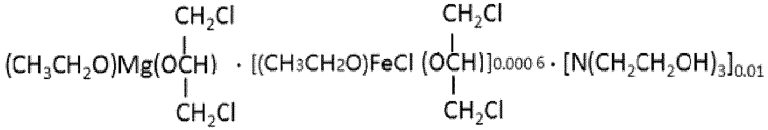

The carrier has a particle size distribution of D50 = 72.2 µm and span = 0.65.

### Example 18

The preparation method was the same as described in Example 14, except that the reaction temperature was 60 °C.

The carrier has a particle size distribution of D50 = 38.8 µm and span = 0.66.

### Example 19

The preparation method was the same as described in Example 18, except that the amount of the ferrous chloride added was 5 mmol. Through characterization by nuclear magnetic resonance, elemental analysis and gas chromatography, it was found that the carrier had the following structure:

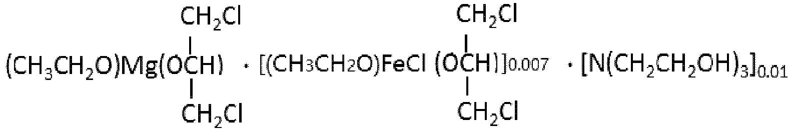

The carrier has a particle size distribution of D50 = 35.4 µm and span = 0.66.

### Example 20

The preparation method was the same as described in Example 14, except that the amount of ferrous chloride tetrahydrate added was 0.1g.

The carrier has a particle size distribution of D50 = 81.6 µm and span = 0.59.

### Example 21

The preparation method was the same as described in Example 20, except that the amount of the ethanol added was 2.4 mol.

The carrier has a particle size distribution of D50 = 73.5 µm and span = 0.67.

### Example 22

The preparation method was the same as described in Example 14, except that the 2 mmol of triethanolamine was replaced with 4 mmol of N,N-dimethylethanolamine. Through characterization by nuclear magnetic resonance, elemental analysis and gas chromatography, it was found that the carrier had the following structure:

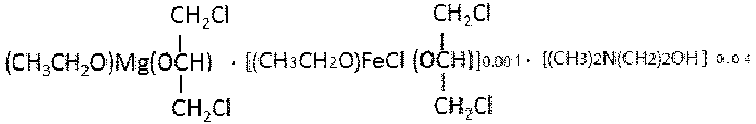

The carrier has a particle size distribution of D50 = 69.5 µm and span = 0.64.

### Example 23

The preparation method was the same as described in Example 16, except that the amount of the triethanolamine added was 0.01 mol. Through characterization by nuclear magnetic resonance, elemental analysis and gas chromatography, it was found that the carrier had the following structure:

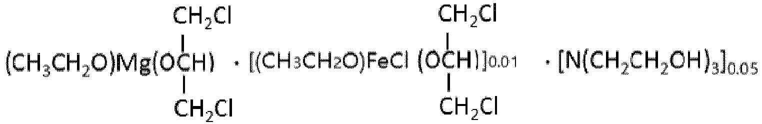

The carrier has a particle size distribution of D50 = 53.2 µm and span = 0.68.

### B-2. Preparation of spherical catalyst component

### Example 24

### (1) Preparation of intermediate reaction product

In a 300 mL glass reaction flask with mechanical stirring, under nitrogen atmosphere, 10 g of the carrier prepared in Example 14 were dispersed in 100 mL of hexane, cooled to -10 °C, and maintained for 0.5 hr. Then, 2.5 ml of tetraethyl titanate (TET) (corresponding to a molar ratio of TET/Mg = 0.2) was added thereto, and the temperature was slowly raised to 60°C and maintained for 0.5hr. The liquid was filtered off, and the solids were washed three times with hexane and then dried under vacuum to afford an intermediate product.

### (2) Preparation of catalyst component

Under an inert atmosphere, 100 ml of titanium tetrachloride was added to a 300 mL glass reaction flask and cooled to -20°C, and 8 g of the intermediate product prepared above in (1) was added thereto. The temperature was raised to 110°C, and 1.5 ml of diisobutyl phthalate was added during the heating process. The liquid was filtered off, and the solids were washed twice with titanium tetrachloride and three times with hexane, and dried under vacuum to obtain a spherical catalyst component.

### (3) Propylene polymerization

A liquid phase bulk polymerization of propylene was carried out in a 5L stainless steel autoclave. Under nitrogen protection, 5 ml of triethylaluminum solution in hexane (having a concentration of 0.5 mmol/ml), 1 ml of cyclohexylmethyldimethoxysilane (CHMMS) solution in hexane (having a concentration of 0.1 mmol/ml) and 9 mg of the above spherical catalyst component were successively added to the autoclave. The autoclave was closed and an amount of hydrogen (standard volume) and 2.3 L of liquid propylene were added thereto. The temperature was raised to 70°C, and the reaction was performed for 1 hour. Then, the temperature was lowered, the pressure was relieved, the materials were discharged, and the resultant propylene homopolymer was dried and weighed. The results are shown in Table 2.

### Example 25

### (1) Preparation of intermediate reaction product

In a 300 mL glass reaction flask with mechanical stirring, under nitrogen atmosphere, 10 g of the carrier prepared in Example 15 were dispersed in 100 mL of hexane, cooled to -10 °C, and maintained for 0.5 hr. Then, 2.5 ml of tetraethyl titanate (TET) (corresponding to a molar ratio of TET/Mg = 0.2) was added thereto, and the temperature was slowly raised to 60°C and maintained for 0.5hr. The liquid was filtered off, and the solids were washed three times with hexane and then dried under vacuum to afford an intermediate product.

### (2) Preparation of catalyst component

Under an inert atmosphere, 100 ml of titanium tetrachloride was added to a 300 mL glass reaction flask and cooled to -20°C, and 8 g of the intermediate product prepared above in (1) was added thereto. The temperature was raised to 110°C, and 1.5 ml of diisobutyl phthalate was added during the heating process. The liquid was filtered off, and the solids were washed twice with titanium tetrachloride and three times with hexane, and dried under vacuum to obtain a spherical catalyst component.

### (3) Propylene polymerization

A liquid phase bulk polymerization of propylene was carried out in a 5L stainless steel autoclave. Under nitrogen protection, 5 ml of triethylaluminum solution in hexane (having a concentration of 0.5 mmol/ml), 1 ml of cyclohexylmethyldimethoxysilane (CHMMS) solution in hexane (having a concentration of 0.1 mmol/ml) and 9 mg of the above spherical catalyst component were successively added to the autoclave. The autoclave was closed and an amount of hydrogen (standard volume) and 2.3 L of liquid propylene were added thereto. The temperature was raised to 70°C, and the reaction was performed for 1 hour. Then, the temperature was lowered, the pressure was relieved, the materials were discharged, and the resultant propylene homopolymer was dried and weighed. The results are shown in Table 2.

### Example 26

### (1) Preparation of intermediate reaction product

In a 300 mL glass reaction flask with mechanical stirring, under nitrogen atmosphere, 10 g of the carrier prepared in Example 21 were dispersed in 100 mL of hexane, cooled to -10 °C, and maintained for 0.5 hr. Then, 2.5 ml of tetraethyl titanate (TET) (corresponding to a molar ratio of TET/Mg = 0.2) was added thereto, and the temperature was slowly raised to 60°C and maintained for 0.5hr. The liquid was filtered off, and the solids were washed three times with hexane and then dried under vacuum to afford an intermediate product.

### (2) Preparation of catalyst component

Under an inert atmosphere, 100 ml of titanium tetrachloride was added to a 300 mL glass reaction flask and cooled to -20°C, and 8 g of the intermediate product prepared above in (1) was added thereto. The temperature was raised to 110°C, and 1.5 ml of diisobutyl phthalate was added during the heating process. The liquid was filtered off, and the solids were washed twice with titanium tetrachloride and three times with hexane, and dried under vacuum to obtain a spherical catalyst component.

### (3) Propylene polymerization

A liquid phase bulk polymerization of propylene was carried out in a 5L stainless steel autoclave. Under nitrogen protection, 5 ml of triethylaluminum solution in hexane (having a concentration of 0.5 mmol/ml), 1 ml of cyclohexylmethyldimethoxysilane (CHMMS) solution in hexane (having a concentration of 0.1 mmol/ml) and 9 mg of the above spherical catalyst component were successively added to the autoclave. The autoclave was closed and an amount of hydrogen (standard volume) and 2.3 L of liquid propylene were added thereto. The temperature was raised to 70°C, and the reaction was performed for 1 hour. Then, the temperature was lowered, the pressure was relieved, the materials were discharged, and the resultant propylene homopolymer was dried and weighed. The results are shown in Table 2.

### Comparative Example 2

Preparation method was the same as described in Example 19, except that the ferrous chloride and the compound of the formula (II) were not added, and that the stirring speed was increased to 1600 rpm. The carrier has a particle size distribution of D50 = 35.4 µm and span = 0.9.

### Comparative Example 3

Preparation method was the same as described in Example 14, except that the 2 mmol of ferrous chloride was replaced with 3 mmol of ferric chloride. The carrier has a particle size distribution of D50 = 76.5 µm and span = 0.68. It was observed that some of the carrier particles agglomerated to form irregular particles.

### Comparative Example 4

Preparation method was the same as described in Example 14, except that the 2 mmol of ferrous chloride was replaced with 6 mmol of ferric chloride. The carrier has a particle size distribution of D50 = 72.5 µm and span = 0.67.

### Comparative Example 5

Preparation method was the same as described in Example 14, except that the triethanolamine was not added. The carrier has a particle size distribution of D50 = 71.0 µm and span = 0.67. It was observed that the carrier has a rough surface and a small amount of agglomeration.

It can be seen from the particle size distributions of the above carriers and the results of the accompanying drawings that adding ferrous chloride during the preparation of the carriers according to the present invention can significantly improve the particle morphology of the carrier and reduce particle agglomeration. Also, as the amount of the ferrous chloride added increases, the particle size of the carrier decreases significantly (cf. Examples 14 to 16), and a carrier having a small particle size can be obtained even under low-speed stirring (cf. Example 19). When no ferrous chloride is added, even if the stirring speed is increased to 1600 rpm, the particle size of the carrier is still 35 µm, and the particle size distribution is obviously broadened (cf. Comparative Example 2). Comparative Examples 3 and 4 show that the effect of adding ferric chloride on adjusting the particle size of the carrier particles is not obvious. Comparative Example 5 shows that only when it is used in combination with the compound of the general formula (II), does the ferrous chloride have obvious improvement effects on the particle morphology of the carrier.

**Table 2. Properties of catalysts prepared by using the example carriers**

| Example No. | Amount of H₂ added NL | Polymerization activity KgPP/gCat | Polymer isotacticity, I.I wt% | Polymer melt index, MI g/10min |
|---|---|---|---|---|
| Example 24 | 1.5 | 32.9 | 97.7 | 10.1 |
| | 5.0 | 36.6 | 96.8 | 25.8 |
| | 6.5 | 31.5 | 95.8 | 41.7 |
| Example 25 | 1.5 | 31.6 | 97.2 | 6.8 |
| Example 26 | 1.5 | 40.4 | 97.7 | 7.5 |
| Comparative Example 1 | 1.5 | 45.2 | 97.5 | 6.5 |
| | 6.5 | 46.6 | 95.8 | 35.1 |

A picture of the catalyst of Example 24 is shown in FIG. 7, and the picture of the catalyst component of Comparative Example 1 is shown in FIG. 5.

It can be seen from the results in Table 2 and Figures 7 and 5 that when the catalyst component prepared from the spherical carrier of the present invention is used for propylene polymerization, it has high polymerization activity and stereospecificity, and at the same time, the catalyst has no cracks on surface and is less broken.

### A-3. Preparation of spherical carriers

### Example 27

In a 1.0L reaction kettle, 1.6g of polyvinylpyrrolidone (PVP, having a weight average molecular weight of 58000), 2.8 mol of ethanol, 0.2 mol of magnesium chloride, and 2 mmol of triethanolamine were successively added, and the temperature was raised to 70°C under stirring (450 rpm). After 1 hour of constant temperature reaction, 0.6 mol of epichlorohydrin was added, the temperature was maintained for 0.5 hours, and the liquid was then filtered off. The solids were washed 5 times with hexane and dried in vacuum to obtain solid component particles. Through characterization by nuclear magnetic resonance, elemental analysis and gas chromatography, it was found that the carrier had the following composition:

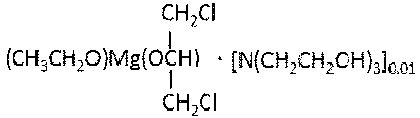

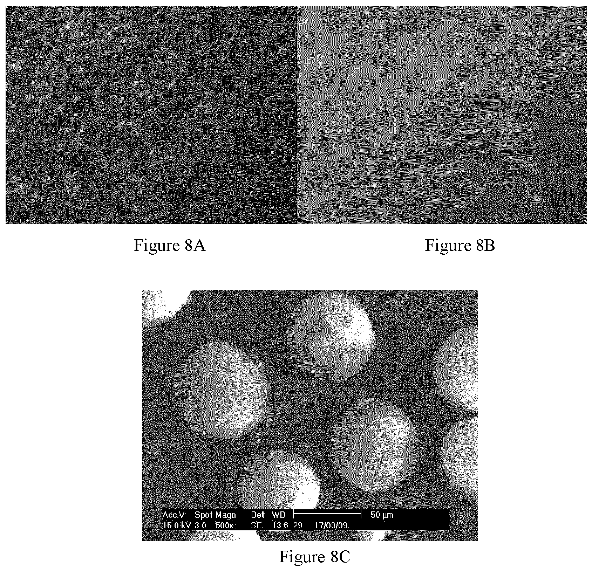

The carrier has a particle size distribution of D50 = 59.9 µm and span = 0.66, and the particle morphology is shown in FIG. 8A (an optical microphotograph, 160 times), FIG. 8B (an optical microphotograph, 400 times), and FIG. 8C (an electron microscope photograph).

### Example 28

The preparation method was the same as described in Example 27, except that the amount of the triethanolamine added was 4 mmol. Through characterization by nuclear magnetic resonance, elemental analysis and gas chromatography, it was found that the carrier had the following composition:

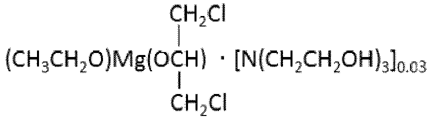

The carrier has a particle size distribution of D50 = 66 µm and span = 0.65.

### Example 29

The preparation method was the same as described in Example 27, except that the amount of triethanolamine added was 6 mmol. Through characterization by nuclear magnetic resonance, elemental analysis and gas chromatography, it was found that the carrier had the following composition:

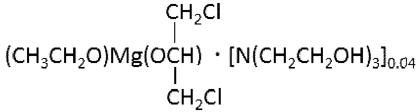

The carrier has a particle size distribution of D50 = 86 µm and span = 0.73.

### Example 30

The preparation method was the same as described in Example 27, except that the 2 mmol of triethanolamine was replaced with 4 mmol of N,N-dimethylethanolamine. Through characterization by nuclear magnetic resonance, elemental analysis and gas chromatography, it was found that the carrier had the following composition:

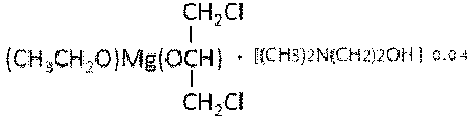

The carrier has a particle size distribution of D50 = 58.6 µm and span = 0.65.

### Example 31

The preparation method was the same as described in Example 27, except that the 2 mmol of triethanolamine was replaced with 2 mmol of diethanolamine. Through characterization by nuclear magnetic resonance, elemental analysis and gas chromatography, it was found that the carrier had the following composition:

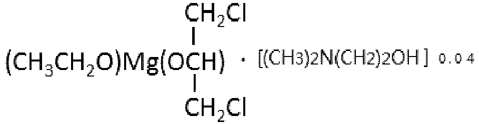

The carrier has a particle size distribution of D50 = 58.6 µm and span = 0.65.

### B-3. Preparation of spherical catalyst components

### Example 32

### (1) Preparation of intermediate reaction product

In a 300 mL glass reaction flask with mechanical stirring, under nitrogen atmosphere, 10 g of the carrier prepared in Example 27 were dispersed in 100 mL of hexane, cooled to -10 °C, and maintained for 0.5 hr. Then, 2.5 ml of tetraethyl titanate (TET) (corresponding to a molar ratio of TET/Mg = 0.2) was added thereto, and the temperature was slowly raised to 60°C and maintained for 0.5hr. The liquid was filtered off, and the solids were washed three times with hexane and then dried under vacuum to afford an intermediate product.

### (2) Preparation of catalyst component

Under an inert atmosphere, 100 ml of titanium tetrachloride was added to a 300 mL glass reaction flask and cooled to -20°C, and 8 g of the intermediate product prepared above in (1) was added thereto. The temperature was raised to 110°C, and 1.5 ml of diisobutyl phthalate was added during the heating process. The liquid was filtered off, and the solids were washed twice with titanium tetrachloride and three times with hexane, and dried under vacuum to obtain a spherical catalyst component.

### (3) Propylene polymerization

A liquid phase bulk polymerization of propylene was carried out in a 5L stainless steel autoclave. Under nitrogen protection, 5 ml of triethylaluminum solution in hexane (having a concentration of 0.5 mmol/ml), 1 ml of cyclohexylmethyldimethoxysilane (CHMMS) solution in hexane (having a concentration of 0.1 mmol/ml) and 9 mg of the above spherical catalyst component were successively added to the autoclave. The autoclave was closed and an amount of hydrogen (standard volume) and 2.3 L of liquid propylene were added thereto. The temperature was raised to 70°C, and the reaction was performed for 1 hour. Then, the temperature was lowered, the pressure was relieved, the materials were discharged, and the resultant propylene homopolymer was dried and weighed. The results are shown in Table 3.

### Example 33

### (1) Preparation of intermediate reaction product

In a 300 mL glass reaction flask with mechanical stirring, under nitrogen atmosphere, 10 g of the carrier prepared in Example 30 were dispersed in 100 mL of hexane, cooled to -10 °C, and maintained for 0.5 hr. Then, 2.5 ml of tetraethyl titanate (TET) (corresponding to a molar ratio of TET/Mg = 0.2) was added thereto, and the temperature was slowly raised to 60°C and maintained for 0.5hr. The liquid was filtered off, and the solids were washed three times with hexane and then dried under vacuum to afford an intermediate product.

### (2) Preparation of catalyst component

Under an inert atmosphere, 100 ml of titanium tetrachloride was added to a 300 mL glass reaction flask and cooled to -20°C, and 8 g of the intermediate product prepared above in (1) was added thereto. The temperature was raised to 110°C, and 1.5 ml of diisobutyl phthalate was added during the heating process. The liquid was filtered off, and the solids were washed twice with titanium tetrachloride and three times with hexane, and dried under vacuum to obtain a spherical catalyst component.

### (3) Propylene polymerization

A liquid phase bulk polymerization of propylene was carried out in a 5L stainless steel autoclave. Under nitrogen protection, 5 ml of triethylaluminum solution in hexane (having a concentration of 0.5 mmol/ml), 1 ml of cyclohexylmethyldimethoxysilane (CHMMS) solution in hexane (having a concentration of 0.1 mmol/ml) and 9 mg of the above spherical catalyst component were successively added to the autoclave. The autoclave was closed and an amount of hydrogen (standard volume) and 2.3 L of liquid propylene were added thereto. The temperature was raised to 70°C, and the reaction was performed for 1 hour. Then, the temperature was lowered, the pressure was relieved, the materials were discharged, and the resultant propylene homopolymer was dried and weighed. The results are shown in Table 3.

It can be seen from the particle size distributions of the above carriers and the results of the accompanying drawings that adding the compound represented by the general formula (II) during the preparation of the carriers according to the present invention can improve the particle morphology of the carrier so that the particles are of surface smooth and therefore further reduce particle agglomeration.

**Table 3. Properties of catalysts prepared by using the example carriers**

| Example No. | Amount of H₂ added NL | Polymerization activity KgPP/gCat | Polymer isotacticity, I.I wt% | Polymer melt index, MI g/10min |
|---|---|---|---|---|
| Example 32 | 1.5 | 38.7 | 97.5 | 11.8 |
| | 5.0 | 42.0 | 96.0 | 32.0 |
| | 6.5 | 40.0 | 95.6 | 46.5 |
| Example 33 | 1.5 | 38.6 | 97.6 | 7.5 |
| Comparative Example 1 | 1.5 | 45.2 | 97.5 | 6.5 |
| | 6.5 | 46.6 | 95.8 | 35.1 |

It can be seen from the results in Table 3 that the addition of the alcohol amine compounds during the preparation of the carrier can improve the hydrogen modulation sensitivity of the catalyst.

### A-4. Preparation of carriers for polyolefin catalyst

### Example 34

In a 1.0L reaction kettle, 1.6g of polyvinylpyrrolidone (PVP, having a weight average molecular weight of 58000), 2.8 mol of ethanol, 0.2 mol of magnesium chloride, 3 mmol of cuprous chloride and 2 mmol of triethanolamine were successively added, and the temperature was raised to 70°C under stirring (with a stirring speed of 450 rpm). After 1 hour of constant temperature reaction, 0.6 mol of epichlorohydrin was added, the temperature was maintained for 0.5 hours, and the liquid was then filtered off. The solids were washed 5 times with hexane, and dried in vacuum to obtain solid component particles. Through characterization by nuclear magnetic resonance, elemental analysis and gas chromatography, it was found that the carrier had the following composition:

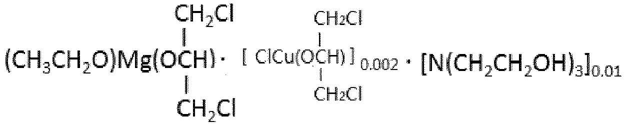

The carrier has a particle size distribution of D50 = 68.2 µm and span = 0.64.

### Example 35

The preparation method was the same as described in Example 34, except that the amount of the cuprous chloride added was 6 mmol. Through characterization by nuclear magnetic resonance, elemental analysis and gas chromatography, it was found that the carrier had the following composition:

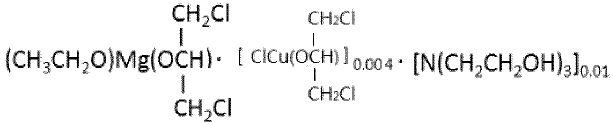

The carrier has a particle size distribution of D50 = 54.8 µm and span = 0.64.

### Example 36

The preparation method was the same as described in Example 34, except that the amount of the cuprous chloride added was 0.01 mol. The carrier has a particle size distribution of D50 = 45.4 µm and span = 0.64.

### Example 37

The preparation method was the same as described in Example 36, except that the reaction temperature was 60°C. Through characterization by nuclear magnetic resonance, elemental analysis and gas chromatography, it was found that the carrier had the following composition:

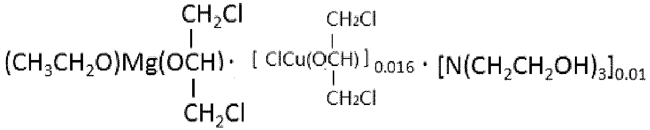

The carrier has a particle size distribution of D50 = 31 µm and span = 0.64.

### Example 38

The preparation method was the same as described in Example 36, except that the amount of the ethanol added was 2.4mol, and the amount of the cuprous chloride added was 0.01 mol.

Through characterization by nuclear magnetic resonance, elemental analysis and gas chromatography, it was found that the carrier had the following composition:

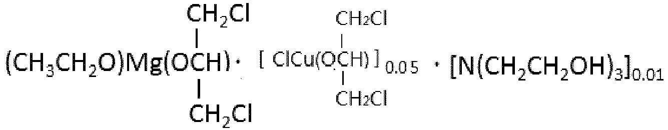

The carrier has a particle size distribution of D50 = 36.2 µm and span = 0.64.

### Example 39

The preparation method was the same as described in Example 35, except that the amount of the triethanolamine added was 0.01 mol. Through characterization by nuclear magnetic resonance, elemental analysis and gas chromatography, it was found that the carrier had the following composition:

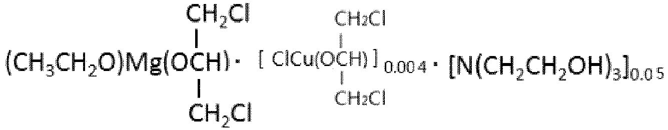

The carrier has a particle size distribution of D50 = 57.8 µm and span = 0.7.

### Example 40

The preparation method was the same as described in Example 34, except that the 2mmol of triethanolamine was replaced with 4 mmol of N,N-dimethylethanolamine. Through characterization by nuclear magnetic resonance, elemental analysis and gas chromatography, it was found that the carrier had the following composition:

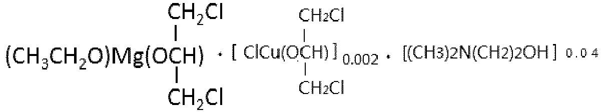

The carrier has a particle size distribution of D50 = 52.8 µm and span = 0.64.

### Example 41

The preparation method was the same as described in Example 37, except that the stirring speed was 1200rpm.

The carrier has a particle size distribution of D50 = 24.5 µm and span = 0.64.

### Example 42

The preparation method was the same as described in Example 34, except that the triethanolamine was not added. Through characterization by nuclear magnetic resonance, elemental analysis and gas chromatography, it was found that the carrier had the following composition:

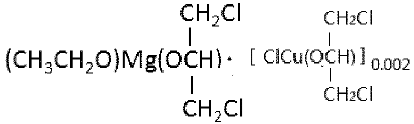

The carrier has a particle size distribution of D50 = 60.4 µm and span = 0.63.

### Example 43

The preparation method was the same as described in Example 42, except that the amount of the cuprous chloride was 6 mmol, and the triethanolamine was not added.

The carrier has a particle size distribution of D50 = 57.2 µm and span = 0.64.

### Example 44

The preparation method was the same as described in Example 43, except that the amount of the cuprous chloride was 12 mmol, and the triethanolamine was not added.

The carrier has a particle size distribution of D50 = 35.3 µm and span = 0.67.

### Example 45

The preparation method was the same as described in Example 34, except that the cuprous chloride was replaced with copper chloride.

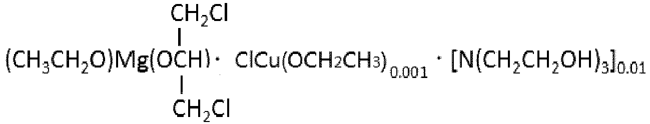

The carrier has a particle size distribution of D50 = 62.5 µm and span = 0.69.

### Example 46

The preparation method was the same as described in Example 45, except that the amount of the copper chloride added was 6 mmol.

The carrier has a particle size distribution of D50 = 60.2 µm and span = 0.68.

### B-4. Preparation of spherical catalyst components

### Example 47

### (1) Preparation of intermediate reaction product

In a 300 mL glass reaction flask with mechanical stirring, under nitrogen atmosphere, 10 g of the carrier prepared in Example 34 were dispersed in 100 mL of hexane, cooled to -10 °C, and maintained for 0.5 hr. Then, 2.5 ml of tetraethyl titanate (TET) (corresponding to a molar ratio of TET/Mg = 0.2) was added thereto, and the temperature was slowly raised to 60°C and maintained for 0.5hr. The liquid was filtered off, and the solids were washed three times with hexane and then dried under vacuum to afford an intermediate product.

### (2) Preparation of catalyst component

Under an inert atmosphere, 100 ml of titanium tetrachloride was added to a 300 mL glass reaction flask and cooled to -20°C, and 8 g of the intermediate product prepared above in (1) was added thereto. The temperature was raised to 110°C, and 1.5 ml of diisobutyl phthalate was added during the heating process. The liquid was filtered off, and the solids were washed twice with titanium tetrachloride and three times with hexane, and dried under vacuum to obtain a spherical catalyst component.

### (3) Propylene polymerization

A liquid phase bulk polymerization of propylene was carried out in a 5L stainless steel autoclave. Under nitrogen protection, 5 ml of triethylaluminum solution in hexane (having a concentration of 0.5 mmol/ml), 1 ml of cyclohexylmethyldimethoxysilane (CHMMS) solution in hexane (having a concentration of 0.1 mmol/ml) and 9 mg of the above spherical catalyst component were successively added to the autoclave. The autoclave was closed and an amount of hydrogen (standard volume) and 2.3 L of liquid propylene were added thereto. The temperature was raised to 70°C, and the reaction was performed for 1 hour. Then, the temperature was lowered, the pressure was relieved, the materials were discharged, and the resultant propylene homopolymer was dried and weighed. The results are shown in Table 4.

### Example 48

### (1) Preparation of intermediate reaction product

In a 300 mL glass reaction flask with mechanical stirring, under nitrogen atmosphere, 10 g of the carrier prepared in Example 40 were dispersed in 100 mL of hexane, cooled to -10 °C, and maintained for 0.5 hr. Then, 2.5 ml of tetraethyl titanate (TET) (corresponding to a molar ratio of TET/Mg = 0.2) was added thereto, and the temperature was slowly raised to 60°C and maintained for 0.5hr. The liquid was filtered off, and the solids were washed three times with hexane and then dried under vacuum to afford an intermediate product.

### (2) Preparation of catalyst component

Under an inert atmosphere, 100 ml of titanium tetrachloride was added to a 300 mL glass reaction flask and cooled to -20°C, and 8 g of the intermediate product prepared above in (1) was added thereto. The temperature was raised to 110°C, and 1.5 ml of diisobutyl phthalate was added during the heating process. The liquid was filtered off, and the solids were washed twice with titanium tetrachloride and three times with hexane, and dried under vacuum to obtain a spherical catalyst component.

### (3) Propylene polymerization

A liquid phase bulk polymerization of propylene was carried out in a 5L stainless steel autoclave. Under nitrogen protection, 5 ml of triethylaluminum solution in hexane (having a concentration of 0.5 mmol/ml), 1 ml of cyclohexylmethyldimethoxysilane (CHMMS) solution in hexane (having a concentration of 0.1 mmol/ml) and 9 mg of the above spherical catalyst component were successively added to the autoclave. The autoclave was closed and an amount of hydrogen (standard volume) and 2.3 L of liquid propylene were added thereto. The temperature was raised to 70°C, and the reaction was performed for 1 hour. Then, the temperature was lowered, the pressure was relieved, the materials were discharged, and the resultant propylene homopolymer was dried and weighed. The results are shown in Table 4.

### Example 49

### (1) Preparation of intermediate reaction product

In a 300 mL glass reaction flask with mechanical stirring, under nitrogen atmosphere, 10 g of the carrier prepared in Example 42 were dispersed in 100 mL of hexane, cooled to -10 °C, and maintained for 0.5 hr. Then, 2.5 ml of tetraethyl titanate (TET) (corresponding to a molar ratio of TET/Mg = 0.2) was added thereto, and the temperature was slowly raised to 60°C and maintained for 0.5hr. The liquid was filtered off, and the solids were washed three times with hexane and then dried under vacuum to afford an intermediate product.

### (2) Preparation of catalyst component

Under an inert atmosphere, 100 ml of titanium tetrachloride was added to a 300 mL glass reaction flask and cooled to -20°C, and 8 g of the intermediate product prepared above in (1) was added thereto. The temperature was raised to 110°C, and 1.5 ml of diisobutyl phthalate was added during the heating process. The liquid was filtered off, and the solids were washed twice with titanium tetrachloride and three times with hexane, and dried under vacuum to obtain a spherical catalyst component.

### (3) Propylene polymerization

A liquid phase bulk polymerization of propylene was carried out in a 5L stainless steel autoclave. Under nitrogen protection, 5 ml of triethylaluminum solution in hexane (having a concentration of 0.5 mmol/ml), 1 ml of cyclohexylmethyldimethoxysilane (CHMMS) solution in hexane (having a concentration of 0.1 mmol/ml) and 9 mg of the above spherical catalyst component were successively added to the autoclave. The autoclave was closed and an amount of hydrogen (standard volume) and 2.3 L of liquid propylene were added thereto. The temperature was raised to 70°C, and the reaction was performed for 1 hour. Then, the temperature was lowered, the pressure was relieved, the materials were discharged, and the resultant propylene homopolymer was dried and weighed. The results are shown in Table 4.

It can be seen from the particle size distributions of the above carriers and the results of the accompanying drawings that adding cuprous chloride during the preparation of the carriers according to the present invention can significantly improve the particle morphology of the carrier and reduce particle agglomeration. Also, as the amount of the cuprous chloride added increases, the particle size of the carrier decreases significantly (cf. Examples 34 to 36 and 42 to 44). In particular, when the cuprous chloride is used in combination with the amine compound represented by the general formula (II), the surface of the carrier is smoother, the sphericity of the carrier is better, the adjustment effect on the particle size is more obvious, and a small particle size carrier can be obtained even under low-speed stirring (cf. Example 37). When the stirring speed is increased, the particle size of the carrier can be further reduced to 25 µm and a narrow particle size distribution can be achieved (cf. Example 41). When no cuprous chloride is added, even if the stirring speed is increased to 1600 rpm, the particle size of the carrier is still 35 µm, and the particle size distribution is obviously broadened (cf. Comparative Example 2). Examples 45 and 46 show that the effect of adding copper chloride on adjusting the particle size of the carrier particles is not obvious.

**Table 4. Properties of catalysts prepared by using the example carriers**

| Example No. | Amount of H₂ added NL | Polymerization activity KgPP/gCat | Polymer isotacticity, I.I wt% | Polymer melt index, MI g/10min |
|---|---|---|---|---|
| Example 47 | 1.5 | 35.5 | 97.0 | 11.4 |
| | 6.5 | 42.5 | 95.6 | 43.3 |
| Example 48 | 1.5 | 37.5 | 97.6 | 13.0 |
| | 6.5 | 34.5 | 96.4 | 38.2 |
| Example 49 | 1.5 | 39.5 | 97.7 | 7.0 |
| Comparative Example 1 | 1.5 | 45.2 | 97.5 | 6.5 |
| | 6.5 | 46.6 | 95.8 | 35.1 |

It can be seen from the results in Table 4 that the addition of alcohol amine compounds during the preparation of the carrier can improve the hydrogen modulation sensitivity of the catalyst, and has substantially no influence on the polymerization activity of the catalyst.

It should be noted that the foregoing examples are only used to explain the present invention, and do not constitute any limitation to the present invention. The present invention has been described with reference to typical examples, but it should be understood that the words used therein are descriptive and explanative, rather than limitative. The present invention may be modified within the scope of the claims of the present invention as specified, and may be modified without departing from the scope and spirit of the present invention. Although the invention described herein relates to the specific methods, materials and examples, it is not intended to be limited to the specific examples disclosed therein, but rather, the invention extends to all other methods and applications having the same function.

## Claims

1. A carrier of polyolefin catalysts, comprising:
(i) a magnesium compound represented by the following formula (1): 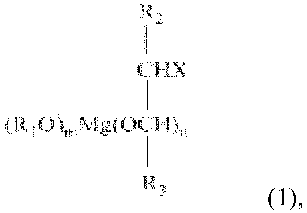 wherein R₁ is a C₁ to C₁₂ linear or branched alkyl; R₂ and R₃, which are the same or different, are hydrogen or an unsubstituted or halogenated C₁ to C₅ linear or branched alkyl; X is a halogen; m is 0.1 to 1.9; n is 0.1 to 1.9; and m+n = 2;
(ii) a Lewis base (LB), and
(iii) optionally, a metal component other than magnesium, preferably the other metal component is one or both of iron and cupper; preferably the content of the other metal component in terms of metal in the solid component is from 0 to 1 wt%,
wherein the Lewis base is a compound represented by general formula (II), 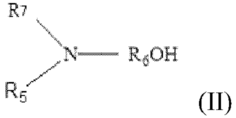 wherein, R₅ and R₇, which are the same or different, are hydrogen or an unsubstituted or hydroxyl-substituted C₁ to C₈ linear or branched alkyl; R₆ is a C₁ to C₈ linear or branched alkylene; or
the Lewis base is an amide compound represented by general formula (II'), 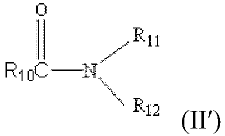 wherein, R₁₀ is hydrogen, amino or a C₁ to C₈ linear or branched alkyl, and R₁₁ and R₁₂, which are the same or different, are hydrogen or a C₁ to C₈ linear or branched alkyl.

2. The carrier of polyolefin catalysts as claimed in claim 1, which comprises a composition represented by general formulae (I), (I') or (I"): 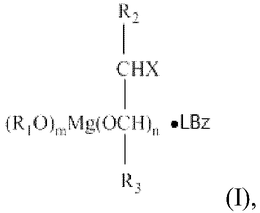 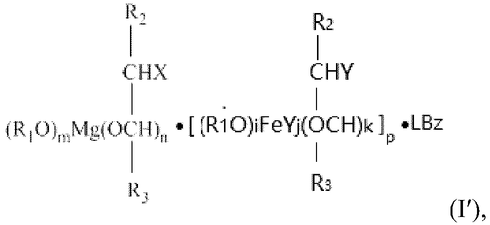 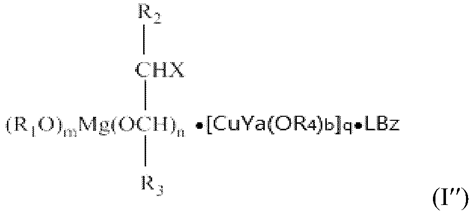
wherein, in the formula (I'), R₁ is a C₁ to C₁₂ linear or branched alkyl; R₂ and R₃, which are the same or different, are hydrogen or an unsubstituted or halogenated C₁ to C₅ linear or branched alkyl; X and Y independently represent a halogen; m is 0.1 to 1.9; n is 0.1 to 1.9; m+n = 2; 0<i≤2; 0<j≤2; 0<k≤2; i+j+k = 3; 0<p≤0.1; and 0<z<0.1;
in the formula (I), R₁ is a C₁ to C₁₂ linear or branched alkyl; R₂ and R₃, which are the same or different, are hydrogen or an unsubstituted or halogenated C₁ to C₅ linear or branched alkyl; X is a halogen; m is 0.1 to 1.9; n is 0.1 to 1.9; m+n = 2; and 0<z<0.5;
in the formula (I"), R₁ is a C₁ to C₁₂ linear or branched alkyl; R₂ and R₃, which are the same or different, are hydrogen or an unsubstituted or halogenated C₁ to C₅ linear or branched alkyl; X and Y independently represent a halogen; m is 0.1 to 1.9; n is 0.1 to 1.9; m+n = 2; 0≤a<2, 0<b≤2, a+b = 2; 0<q<0.1; and 0≤z<0.1;
LB is a compound represented by general formula (II), 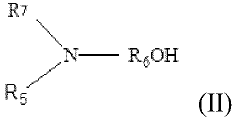
wherein R₅ and R₇, which are the same or different, are hydrogen or an unsubstituted or hydroxyl-substituted C₁ to C₈ linear or branched alkyl; and R₆ is a C₁ to C₈ linear or branched alkylene.

3. The carrier of polyolefin catalysts as claimed in claim 2, having at least one of the following features:
- in the general formula (I), the general formula (I') or the general formula (I"), R₁ is a C₁ to C₈ linear or branched alkyl, preferably R₁ is selected from the group consisting of ethyl, n-propyl, isopropyl, n-butyl, isobutyl, n-pentyl, isopentyl, n-hexyl, n-octyl and 2-ethylhexyl;
- in the general formula (I), the general formula (I') or the general formula (I"), R₂ and R₃ are each independently hydrogen, a C₁ to C₃ linear or branched alkyl or a halogenated C₁ to C₃ linear or branched alkyl, preferably R₂ and R₃ are each independently hydrogen, methyl, ethyl, chloromethyl, chloroethyl, bromomethyl or bromoethyl;
- in the general formula (II), R₅ and R₇ are hydrogen or a C₁ to C₅ linear or branched alkyl, and R₆ is a C₁ to C₅ linear or branched alkylene;
- the halogen is selected from the group consisting of chlorine, bromine and iodine, preferably chlorine;
- the compound represented by the general formula (II) is one or more of ethanolamine, diethanolamine, triethanolamine, N,N-dimethylethanolamine, N,N-diethylethanolamine and N-methyldiethanolamine.

4. The carrier of polyolefin catalysts as claimed in claim 2, **characterized in that** the carrier has an average particle size of from 10 to 100 microns, preferably from 30 to 70 microns, and a particle size distribution of less than 1.2, preferably from 0.7 to 0.9.

5. The carrier of polyolefin catalysts as claimed in claim 1, comprising a composition represented by the general formula (I‴): 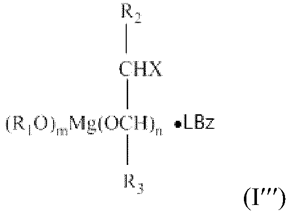
wherein R₁ is a C₁ to C₁₂ linear or branched alkyl; R₂ and R₃, which are the same or different, are hydrogen or an unsubstituted or halogenated C₁ to C₅ linear or branched alkyl; X is a halogen; m is 0.1 to 1.9; n is 0.1 to 1.9; m+n = 2; 0<z<0.5; LB is an amide compound represented by the general formula (II), 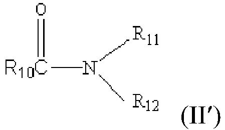
wherein R₁₀ is hydrogen, amino or a C₁ to C₈ linear or branched alkyl, and R₁₁ and R₁₂, which are the same or different, are hydrogen or a C₁ to C₈ linear or branched alkyl.

6. The carrier as claimed in claim 5, having at least one of the following features:
- R₁ is a C₁ to C₈ linear or branched alkyl, preferably R₁ is selected from the group consisting of ethyl, n-propyl, isopropyl, n-butyl, isobutyl, n-pentyl, isopentyl, n-hexyl, n-octyl and 2-ethylhexyl;
- R₂ and R₃ are each independently hydrogen, a C₁ to C₃ linear or branched alkyl or a halogenated C₁ to C₃ linear or branched alkyl, preferably R₂ and R₃ are each independently methyl, ethyl, chloromethyl, chloroethyl, bromomethyl and bromoethyl;
- R₁₀ is hydrogen, amino or a C₁ to C₅ linear or branched alkyl, and R₁₁ and R₁₂ are hydrogen or a C₁ to C₅ linear or branched alkyl;
- the halogen is selected from the group consisting of chlorine, bromine and iodine, preferably chlorine;
- the amide compound is one or more of formamide, acetamide, propionamide, N-methylacetamide, N,N-dimethylacetamide and carbonamide;
- the carrier is spherical and has an average particle size of from 10 to 100 microns, preferably from 30 to 70 microns, and a particle size distribution of less than 1.2, preferably from 0.7 to 0.9.

7. The carrier as claimed in claim 5, further comprising a metal component other than magnesium, preferably the other metal component is one or both of iron and cupper; preferably the content of the other metal component in the solid component is from 0 to 1 % by weight.

8. A method for preparing the carrier for polyolefin catalysts, comprising the steps of:
(a) reacting a magnesium halide represented by general formula MgX₂, an optional metal halide, an alcohol compound represented by general formula R₁OH, and a compound represented by general formula (II) or (II') to form a solution, 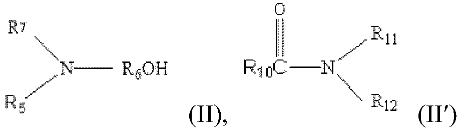 wherein, X is a halogen; R₁ is a C₁-C₁₂ linear or branched alkyl; R₅ and R₇, which are the same or different, are hydrogen or an unsubstituted or hydroxyl-substituted Ci-Cs linear or branched alkyl; R₆ is a Ci-Cs linear or branched alkylene; R₁₀ is hydrogen, amino or a C₁-C₈ linear or branched alkyl; and R₁₁ and R₁₂, which are the same or different, are hydrogen or a Ci-Cs linear or branched alkyl;
(b) reacting the solution formed in step (a) with an epoxy compound to directly generate spherical solid particles; and
(c) recovering the spherical solid particles formed in step (b).

9. The method as claimed in claim 8, comprising the steps of:
(a) reacting the magnesium halide represented by the general formula MgX₂, an optional metal halide of the structure formula FeY₂ or an optional metal halide of the structure formula CuYc, the alcohol compound represented by the general formula R₁OH and the compound represented by the general formula (II) to form a solution, 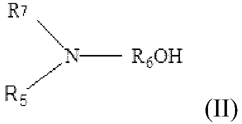 wherein R₁ is a C₁-C₁₂ linear or branched alkyl, R₅ and R₇, which are the same or different, are hydrogen or an unsubstituted or hydroxyl-substituted Ci-Cs linear or branched alkyl; R₆ is a C₁-C₈ linear or branched alkylene, X and Y are a halogen, and c=1 or 2;
(b) reacting the solution formed in step (a) with an epoxy compound to directly generate spherical solid particles, preferably the epoxy compound is represented by the general formula (III), 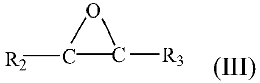 wherein R₂ and R₃, which are the same or different, are hydrogen or an unsubstituted or halogenated C₁ to C₅ linear or branched alkyl; and
(c) recovering the spherical solid particles formed in step (b).

10. The method as claimed in claim 9, having at least one of the following features:
- R₁ is a C₁ to C₈ linear or branched alkyl, preferably R₁ is a C₁ to C₆ linear or branched alkyl;
- R₅ and R₇ are hydrogen or a C₁ to C₅ linear or branched alkyl, and R₆ is a C₁ to C₅ linear or branched alkylene;
- R₂ and R₃ are each independently hydrogen, a C₁ to C₃ linear or branched alkyl or a halogenated C₁ to C₃ linear or branched alkyl;
- in step (a), a polymeric dispersion stabilizer is added during the preparation of the solution, with the weight average molecular weight of the polymeric dispersion stabilizer being greater than 1000, preferably greater than 3000;
- the magnesium halide is one or more of magnesium dichloride, magnesium dibromide, and magnesium diiodide;
- the metal halide is one or more of ferrous chloride, ferrous chloride tetrahydrate, ferrous bromide, and ferrous iodide, preferably ferrous chloride and its hydrates;
- the carrier has an average particle size of from 10 to 100 microns, preferably from 30 to 70 microns;
- the carrier has a particle size distribution of less than 1.2, preferably from 0.7 to 0.9;
- in step (a), the preparation of the solution is carried out at a temperature of from 30 to 160 °C, preferably from 40 to 120 °C;
- the amount of the R₁OH compound added is from 3 to 30 moles, preferably from 4 to 25 moles, relative to one mole of magnesium;
- a molar ratio of the compound represented by the general formula (II) to the magnesium halide is 1:100 to 1:5, preferably 1:50 to 1:5;
- the amount of the metal halide added is 0.001 to 0.1 moles, preferably 0.003 to 0.08 moles, relative to one mole of magnesium;
- in step (b), the reaction temperature is from 30 to 160 °C, preferably from 40 to 120 °C;
- in step (b), the amount of the oxirane-type compound added is 1 to 10 moles, preferably 2 to 6 moles, relative to one mole of magnesium.

11. The method as claimed in claim 8, comprising the steps of:
(a) reacting the magnesium halide represented by the general formula MgX₂ with the alcohol compound represented by the general formula R₁OH and the amide compound represented by the general formula (II') to form a solution, 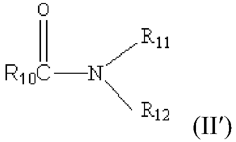 wherein R₁ is a C₁-C₁₂ linear or branched alkyl, R₁₀ is hydrogen, amino or a Ci-Cs linear or branched alkyl, R₁₁ and R₁₂, which are the same or different, are hydrogen or a Ci-Cs linear or branched alkyl, and X is a halogen;
(b) reacting the solution formed in step (a) with an epoxy compound to directly generate spherical solid particles, preferably the epoxy compound is represented by the general formula (III), 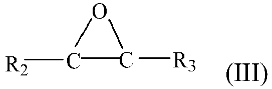 wherein R₂ and R₃, which are the same or different, are hydrogen or an unsubstituted or halogenated C₁ to C₅ linear or branched alkyl.

12. The method as claimed in claim 11, having at least one of the following features:
- R₁ is a C₁ to C₈ linear or branched alkyl;
- R₁₀ is hydrogen, amino or a C₁ to C₅ linear or branched alkyl, and R₁₁ and R₁₂ are hydrogen or a C₁ to C₅ linear or branched alkyl;
- R₂ and R₃ are each independently hydrogen, a C₁ to C₃ linear or branched alkyl or a halogenated C₁ to C₃ linear or branched alkyl;
- in step (a), a reductive metal halide is added during the preparation of the solution, preferably the metal halide having a formula of MYₐ, wherein Y is a halogen, M is one or more of iron and cupper, and a is 1 or 2, more preferably the metal halide being selected from the group consisting of CuCl and FeCl₂; and the amount of the metal halide added is 0.001 to 0. 1moles, preferably 0.003 to 0.08 moles, relative to one mole of magnesium;
- in step (a), a polymeric dispersion stabilizer is added during the preparation of the solution, with the weight average molecular weight of the polymeric dispersion stabilizer being greater than 1000, preferably greater than 3000;
- in step (a), the preparation of the solution is carried out at a temperature of from 30 to 160 °C, preferably from 40 to 120 °C;
- in step (a), the amount of the R₁OH compound added is from 3 to 30 moles, preferably from 4 to 25 moles, relative to one mole of magnesium;
- a molar ratio of the compound represented by the general formula (II') to the magnesium halide is 1:100 to 1:5, preferably 1:50 to 1:5;
- in step (b), the reaction temperature is from 30 to 160 °C, preferably from 40 to 120 °C;
- in step (b), the amount of the oxirane-type compound added is 1 to 10 moles, preferably 2 to 6 moles, relative to one mole of magnesium;
- the solid component is spherical, and has an average particle size of from 10 to 100 microns, preferably from 30 to 70 microns, and a particle size distribution of less than 1.2, preferably from 0.7 to 0.9.

13. A catalyst component for olefin polymerization, comprising a reaction product of the carrier as claimed in any one of claims 1 to 7 with a titanium compound and an internal electron donor compound.

14. A catalyst system for olefin polymerization, comprising the catalyst component as claimed in claim 13, an alkylaluminum compound, and optionally an external electron donor compound.

15. A method for olefin polymerization, comprising contacting one or more olefins with the catalyst system as claimed in claim 14 under olefin polymerization conditions to form a polyolefin, and recovering the resulting polyolefin.
